# EUROPÄISCHE PATENTSCHRIFT

(11) **EP 3 899 334 B1**
(45) Veröffentlichungstag und Bekanntmachung des Hinweises auf die Patenterteilung: **16.07.2025**
(21) Anmeldenummer: 19832878.3
(22) Anmeldetag: 17.12.2019
(51) Int. Cl.: F16K 31/06, F16K 37/00, F16K 1/44, H01F 7/16, H01F 7/18

(54) **ELEKTROPNEUMATISCHES MAGNETVENTIL, FELDGERÄT MIT EINEM MAGNETVENTIL UND DIAGNOSEVERFAHREN FÜR EIN ELEKTROPNEUMATISCHES MAGNETVENTIL**
ELECTROPNEUMATIC SOLENOID VALVE, FIELD DEVICE HAVING SOLENOID VALVE AND DIAGNOSTIC METHOD FOR ELECTROPNEUMATIC SOLENOID VALVE
ÉLECTROVANNE ÉLECTROPNEUMATIQUE, APPAREIL DE TERRAIN MUNI D'UNE ÉLECTROVANNE ET PROCÉDÉ DE DIAGNOSTIC POUR UNE ÉLECTROVANNE ÉLECTROPNEUMATIQUE

(30) Priorität: 17.12.2018 DE 102018132442
(43) Veröffentlichungstag der Anmeldung: 27.10.2021
(73) Patentinhaber: Samson Aktiengesellschaft, 60314 Frankfurt am Main (DE)
(72) Erfinder: WEIGAND, Christof, 61440 Oberursel (DE); KOLBENSCHLAG, Stefan, 64291 Darmstadt (DE)
(74) Vertreter: Schmid, Nils T.F.
(86) Internationale Anmeldenummer: PCT/EP2019/085676
(87) Internationale Veröffentlichungsnummer: WO 2020/127282

(56) Entgegenhaltungen:
- EP-A1- 2 796 695
- EP-A1- 2 796 695
- EP-A2- 1 001 199
- EP-A2- 1 001 199
- EP-A2- 1 001 199
- DE-A1- 102007 063 479
- DE-A1- 102007 063 479
- DE-A1- 19 711 289
- DE-A1- 19 711 289
- DE-A1- 19 711 289
- DE-A1- 2 903 296
- DE-A1- 2 903 296
- DE-A1- 2 903 296
- DE-A1- 3 807 278
- DE-A1- 3 807 278
- DE-A1- 4 204 417
- DE-A1- 4 204 417
- DE-A1- 4 204 417
- JP-U- S5 534 093
- JP-U- S5 534 093
- JP-U- S5 534 093
- US-A- 3 203 441
- US-A- 3 203 441
- US-A- 3 203 441
- US-A- 5 535 783
- US-A- 5 535 783
- US-A- 5 535 783

## Beschreibung

Gegenstand der Erfindung ist ein elektropneumatisches Magnetventil für ein Feldgerät einer prozesstechnischen Anlage, wie ein Kraftwerk, beispielsweise ein Nuklearkraftwerk, eine chemische Anlage, beispielsweise eine petrochemische Anlage, wie eine Raffinerie, eine lebensmittelverarbeitende Anlage, wie eine Brauerei oder eine Molkerei, oder dergleichen. Die Erfindung betrifft auch ein Feldgerät mit einem einfachwirkenden oder doppeltwirkenden pneumatischen Stellantrieb, der ein elektropneumatisches Magnetventil umfasst. Die Erfindung betrifft ferner ein Diagnoseverfahren für ein elektropneumatisches Magnetventil.

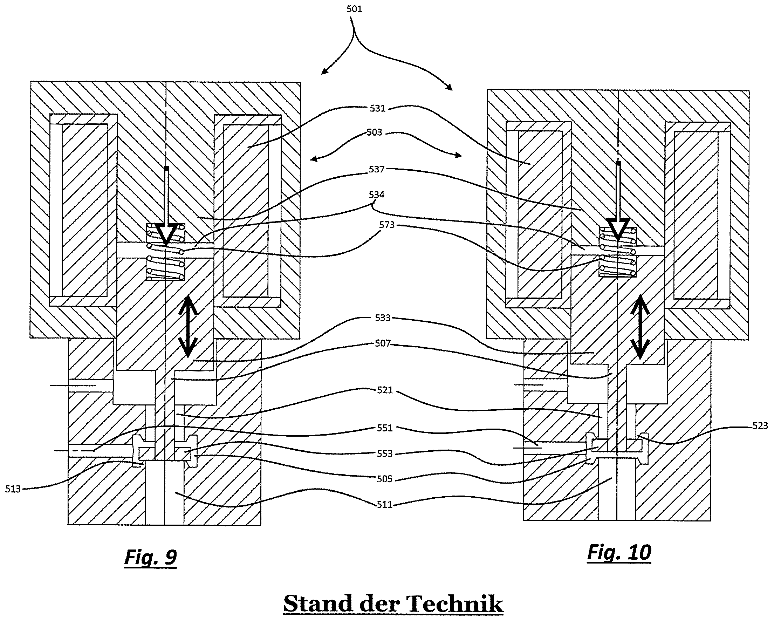

Aus dem Stand der Technik sind elektropneumatische Magnetventile bekannt, die einen elektropneumatischen Aktor und ein damit betätigtes 3/2-Wegeventil umfassen. Ein solches 3/2-Wegeventil (501) ist in den Figuren 9 und 10 abgebildet. Das 3/2-Wegeventil (501) kann beim Einsatz in einem elektropneumatischen Feldgerät einen mit einer Pneumatikquelle verbundenen Zuluftkanal (511), einen mit einer Druckluftsenke, wie der Atmosphäre, verbundenen Abluftkanal (521) sowie einen Steuerluftkanal (551) zum Be- und Entlüften eines pneumatischen Aktor aufweisen. Das 3/2-Wegeventil (501) umfasst ferner eine Luftkammer (505), in die die Luftkanäle (511, 521, 551) münden, sowie ein innerhalb der Luftkammer (505) bewegliches Ventilglied (553). Das Ventilglied (553) kann entweder den Zuluftkanal (511) oder den Abluftkanal (521) verschließen.

Zum Betätigen des Ventilgliedes (553), also zum Bewegen des Ventilgliedes zwischen einer Abluftkanal-Schließstellung (Fig. 10) und einer Zuluftkanal-Schließstellung (Fig. 9), ist das Ventilglied mit einer Stellstange (507) starr mit einem Magnetanker (533) eines elektromagnetischen Linearantriebs (503) verbunden. Der elektromagnetische Linearantrieb ist mit einer Rückstellfeder (573) zwischen dem Magnetanker (533) und dem ferromagnetischen Kern (537) des Antriebs ausgestattet. Die Rückstellfeder ist dazu vorgesehen, bei inaktivem elektromagnetischen Antrieb durch Stromlosschaltung der Spule (531) den Magnetanker (533) beispielsweise in die Zuluftkanal-Schließstellung (Fig. 9) zu bringen. Beim Aktivieren des elektromagnetischen Aktors wird der Magnetanker entgegen der Kraft der Rückstellfeder (573) magnetisch angezogen und bewegt sich bei hinreichend starker Spannung derart, dass das Ventilglied in die Abluftkanal-Schließstellung (Fig. 10) verbracht wird.

Zwischen dem Magnetanker und dem magnetisierbaren Kern ist ein nichtmagnetischer Spaltraum (534) vorgesehen, um zu vermeiden, dass der Magnetanker (533) in einen Berührkontakt mit dem magnetisierbaren Kern (537) gelangt. Bei einem Berührkontakt würden extrem hohe Haftkräfte auftreten. Der Spaltraum ist so bemessen, dass ein gewisses Maß an Abnutzung und/oder Setzung an dem Ventilglied (553) und dem damit kooperierenden Ventilsitz (523) des Abluftkanals (521) toleriert wird, ohne dass ein Berührkontakt zwischen Magnetanker und Kern und der damit einhergehende Funktionsausfall des elektropneumatisches Magnetventil auftritt. Die magnetische Anziehungskraft zwischen Magnetanker und Kern steigt abhängig vom Kehrwert des Abstands zwischen Kern und Magnetanker quadratisch an. Daher wirkt Verschleiß als selbstverstärkender Effekt. Nach einem anfänglichen leichten Verschleiß kann es schnell und unkontrolliert zu einem Ausfall des elektropneumatischen Magnetventils kommen. Um einen Funktionsausfall im Betrieb einer Anlage zu vermeiden, wird das 3/2-Wegeventil präventiv ausgetauscht. Da der IST-Verschleißzustand erst am ausgebauten und demontierten Ventil ersichtlich ist, müssen zugunsten eines sicheren Anlagebetriebs unnötige Austauschkosten in Kauf genommen werden.

Aus DE 10 2016 120 655 A1 ist ein Verfahren zur Zustandsüberwachung eines Magnetventils bekannt, bei dem eine durch Rückstellung eines Stößels innerhalb eines Elektromagneten induzierte Spannung als Funktion der Zeit nach dem Ausschalten des Spulenstroms von einer Messeinheit erfasst und von einer Auswerteeinheit mit einer Referenzfunktion verglichen wird. Aus dem Vergleich sollen Rückschlüsse auf den Zustand der Federn zu ziehen sein. Das in DE 10 2016 120 655 A1 beschriebene Verfahren lässt jedoch keine Rückschlüsse auf Abnutzungs- und/oder Setzungserscheinungen am Ventilglied zu.

JP S55 34093 U betrifft ein korrosionsbeständiges Solenoidventil für niedrige Drücke. DE3807278A1 offenbart eine Diagnoseverfahren aus dem Stand der Technik.

Es ist eine Aufgabe der Erfindung, die Nachteile des Stands der Technik zu überwinden, insbesondere ein Magnetventil und ein Diagnoseverfahren für ein Magnetventil mit erhöhter Ausfallsicherheit bereitzustellen. Diese Aufgabe lösen die Gegenstände der unabhängigen Ansprüche.

Demnach ist ein elektropneumatisches Magnetventil für ein Feldgerät einer prozesstechnischen Anlage, wie ein Kraftwerk, beispielsweise wie ein Nuklearkraftwerk, eine chemische Anlage, beispielsweise eine petrochemische Anlage, eine Lebensmittelverarbeitende Anlage, beispielsweise eine Brauerei, oder dergleichen vorgesehen. Das elektropneumatische Magnetventil umfasst einen elektromagnetischen Aktor mit einer bestrombaren Spule und einem relativ zu der Spule beweglichen Magnetanker. Der elektromagnetische Aktor kann ferner einen relativ zu der Spule stationären Eisenkern oder Magnetkern umfassen. Der elektromagnetische Aktor kann insbesondere ein elektromagnetischer Linearaktor sein.

Das elektropneumatische Magnetventil umfasst eine (erste) Luftkammer, in die drei Luftkanäle münden, wobei die drei Luftkanäle einen ersten Luftkanal, einen zweiten Luftkanal und einen Steuerluftkanal umfassen. Der erste Luftkanal kann beispielsweise ein Zuluftkanal sein, der mit einer Pneumatikquelle, wie einem Druckluftreservoir, einem Kompressor oder dergleichen verbunden ist. Der zweite Kanal kann ein Abluftkanal sein, der mit einer Drucksenke, wie der Atmosphäre, verbunden ist. Der Steuerluftkanal kann mit einem pneumatischen Aktor verbunden sein, um diesen zu Be- und/ oder Entlüften. Das elektropneumatische Magnetventil ist insbesondere als 3/2-Wegeventil ausgestaltet. Wenn das elektropneumatische Magnetventil als 3/2-Wegeventil ausgestaltet ist, kann ein Ventilglied derart in der Luftkammer untergebracht sein, dass das Ventilglied entweder den ersten Luftkanal oder den zweiten Luftkanal verschließt. Das elektropneumatische Magnetventil umfasst ein Ventilglied, das in einer ersten Schließstellung den ersten Luftkanal verschließt und den zweiten Luftkanal freigibt; und das in einer zweiten Schließstellung den zweiten Luftkanal verschließt und den zweiten Luftkanal freigibt; und das in einer zweiten Schließstellung den zweiten Luftkanal verschließt und den ersten Luftkanal freigibt. Insbesondere kann das Ventilglied derart ausgestaltet sein, dass unabhängig von der Stellung des Ventilgliedes der Steuerluftkanal frei ist. Insbesondere ist das elektropneumatische Magnetventil frei von weiteren in die Luftkammer mündenden Luftkanälen. Vorzugsweise münden in die Luftkammer ausschließlich der erste Luftkanal, der zweite Luftkanal und der Steuerluftkanal. Die erste Schließstellung kann als Zuluftkanal-Schließstellung bezeichnet sein. Die zweite Schließstellung kann als Abluftkanal-Schließstellung realisiert sein. Das Ventilglied ist insbesondere ein zumindest teilweise elastisches Dichtelement.

Das erfindungsgemäße Magnetventil umfasst einen beweglichen Mitnehmer, insbesondere eine Stellstange oder Stellwelle. Der Mitnehmer ist in einer ersten Stellrichtung und in einer zu der ersten Stellrichtung entgegengesetzten zweiten Stellrichtung beweglich. Beispielsweise kann ein Mitnehmer als Stellstange ausgeführt und linear, beispielsweise nach unten und oben, beweglich sein. Der Mitnehmer verbindet das Ventilglied kraftübertragungsgemäß mit dem Magnetanker. Zwischen dem Mitnehmer und dem Magnetanker ist wenigstens ein Mitnehm-Vorspannmittel, wie eine Feder, zum Bereitstellen einer Vorspannkraft auf den Mitnehmer in einer Mitnahmerichtung entsprechend der ersten Stellrichtung oder entsprechend der zweiten Stellrichtung angeordnet. Ferner ist wenigstens ein Rückstell-Vorspannmittel, wie eine Rückstellfeder, zum Bereitstellen einer Rückstellkraft auf den Mitnehmer entgegen der Mitnahmerichtung vorgesehen. Das Rückstell-Vorspannmittel kann insbesondere zwischen dem Mitnehmer und dem elektromagnetischen Aktor, vorzugsweise einem relativ zu der Spule unbeweglichen Kern des elektromagnetischen Aktors, angeordnet sein.

Der Mitnehmer ist frei von einer materialschlüssigen und/oder starren Verbindung zu dem Magnetanker. Der Mitnehmer ist relativ zu dem Magnetanker beweglich. Insbesondere kann der Mitnehmer relativ zu dem Magnetanker linear beweglich sein. Der Magnetanker und der Mitnehmer sind vorzugsweise relativ zu der Spule in derselben Richtung beweglich. Beispielsweise kann ein als Stellstange ausgeführter Mitnehmer eine Linearbeweglichkeit entsprechend der Mitnahmerichtung aufweisen und der Magnetanker kann eine Linearbeweglichkeit entsprechend der Stellrichtungen aufweisen, die parallel, insbesondere koaxial, zueinander orientiert sind. Falls ein Mitnehmer beispielsweise als Stellwelle realisiert ist, kann eine Mutationsbewegung relativ zu einer Rotationsachse vorliegen, und der elektromagnetische Aktor kann als Rotationsachse mit einem drehbeweglichen Magnetanker realisiert sein, der sich um dieselbe oder einer anderen Rotationsachse drehen kann.

Vorzugsweise können das Mitnehm-Vorspannmittel und das Rückstell-Vorstellmittel separat voneinander ausgebildet sein. Beispielsweise kann das Mitnehm-Vorspannmittel, wie eine Feder, beispielsweise eine erste Spiralfeder, und das Rückstell-Vorspannmittel als eine Rückstellfeder, beispielsweise eine zweite Spiralfeder, gebildet sein. Es ist denkbar, dass das Mitnehm-Vorspannmittel und/oder das Rückstell-Vorspannmittel als Kunststoff-Feder ausgebildet ist. Beispielsweise kann eine Kunststoff-Feder als Elastomer Block realisiert sein. Es ist denkbar, dass eine derartige Kunststofffeder in der Funktionsunion als einerseits Mitnehm-Vorspannmittel und andererseits Rückstell-Vorspannmittel wirkt. Zum Beispiel, indem die Kunststoff-Feder mit dem Mitnehmer verbunden ist und einerseits an dem Magnetanker und andererseits an einem relativ zu der Spule ortsfesten Teil des elektromagnetischen Aktors abstützt. Eine solche Kunststofffeder kann unterschiedliche Abschnitte aufweisen, wobei ein Abschnitt als Mitnehm-Vorspannmittel wirkt und ein anderer Abschnitt als Rückstell-Vorspannmittel. Es ist denkbar, dass das Rückstell-Vorspannmittel zwischen dem Mitnehmer und dem Magnetanker angeordnet ist.

Gemäß einer bevorzugten Ausführung entspricht die Mitnahmerichtung der zweiten Stellrichtung, das heißt, die erste Stellrichtung entspricht der Bewegungsrichtung des Magnetankers von der zweiten Schließstellung hin zu der ersten Schließstellung. Die zweite Stellrichtung entspricht der Bewegungsrichtung des Magnetankers von der ersten Schließstellung hin zu der zweiten Schließstellung. Bei dieser bevorzugten Ausführung stellt das Mitnehm-Vorspannmittel die Vorspannkraft in Richtung der zweiten Stellrichtung, also in der zweiten Schließstellung, als Mitnahmekraft von dem Ventilglied auf einen Sitz des zweiten Luftkanales bereit.

Durch die Entkopplung des Ventilglieds von dem Magnetanker mittels des Mitnehmers und das Mitnehmer-Vorspannmittel wird eine Begrenzung der Schließkraft des Ventilglieds auf den Ventilsitz des Luftkanals in Mitnahmerichtung bewirkt. Dadurch wird vorteilhafterweise die Schließkraft auf des Ventilgliedes auf einen Ventilsitz begrenzt, selbst wenn der bewegliche Magnetankers sich an einem Kern des elektrischen Aktors sehr starken Annähert, beispielsweise bis auf einen sehr kleinen Spalt. Auf diese Weise können exponentiell selbstverstärkende Verschleißerscheinungen vermieden werden. Gegenüber konventionellen 3/2-Wegeventilen kann die Ausfallsicherheit des erfindungsgemäßen elektropneumatischen Magnetventil auf diese Weise erheblich erhöht werden.

Gemäß einer Ausführung ist der elektromagnetische Aktor mit einem relativ zu der Spule unbeweglichen magnetisierbaren, insbesondere ferromagnetischen, Kern ausgebildet. Zwischen dem Kern und dem Magnetanker ist ein nicht-magnetischer Spaltraum angeordnet. Insbesondere bildet der nicht-magnetische Spaltraum einen Freiraum in der ersten und/oder zweiten Stellrichtung zwischen dem Kern und dem Magnetanker, sodass betriebsgemäß der Kern relativ zu dem Magnetanker stets berührungsfrei ist. Vorzugsweise kann in dem Spaltraum ein Antihaftkörper, wie eine Antihaftbeschichtung oder einer Antihaftscheibe, aus einem nicht magnetisierbaren Material, beispielsweise PTFE (Teflon^{®}), angeordnet sein. Der in dem Spaltraum angeordnete Antihaftkörper kann die Oberfläche des Kerns und/oder des Magnetankers in dem Spaltraum abschnittsweise oder vollflächig bedecken. Der elektromagnetische Aktor ist insbesondere derart zu messen, dass in der ersten Schließstellung und/oder in der zweiten Schließstellung der gegebenenfalls, zumindest teilweise mit einem Antihaftkörper gefüllte, nicht-magnetischer Spalt zwischen dem Kern und dem Anker des Elektromagneten verbleibt.

Gemäß einer Ausführung eines elektropneumatischen Magnetventils weist der Mitnehmer einen Anschlag zum Bestimmen einer Endstellung des Magnetankers relativ zu dem Mitnehmer entgegen der Mitnahmerichtung auf. Die Position des Anschlags in der Mitnahmerichtung kann relativ zu dem Mitnehmer verstellbar sein. Insbesondere ist die Position des Anschlags in Mitnahmerichtung relativ zu dem Mitnehmer ortsfest. Der Anschlag kann starr, beispielsweise formschlüssig oder einstückig, mit dem Mitnehmer verbunden sein. Der Anschlag begrenzt die Beweglichkeit des Magnetankers relativ zu dem Mitnehmer entgegen der Mitnahmerichtung. In der Mitnahmerichtung ist der Magnetanker relativ zu dem Mitnehmer ungehindert durch den Anschlag beweglich. Wenn der Magnetanker durch den elektromagnetischen Aktor und/oder des Rückstell-Vorspannmittel entgegen der Mitnahmerichtung bewegt wird, gelangt der Magnetanker in einen Berührkontakt mit den Anschlag. Indem der Magnetanker gegen den Anschlag des Mitnehmers gedrängt wird ist sichergestellt, dass der Magnetanker und der Mitnehmer entgegen der Mitnahmerichtung eine gemeinsame Bewegung vollführen. Auf diese Weise kann der Magnetanker den Mitnehmer mitnehmen, um das Ventilglied in die erste Schließstellung zu bringen.

Gemäß einer Ausführung eines elektropneumatischen Magnetventils begrenzt das Mitnehm-Vorspannmittel eine Anschlagswirkung, wie eine Anschlagskraft, des Ventilglieds auf einen Ventilsitz in der Mitnahmerichtung. Das Mitnehmer-Vorspannmittel kann die Anschlagskraft des Ventilglieds auf einen Ventilsitz begrenzen, beispielsweise in der Mitnahmerichtung, die beispielsweise der zweiten Stellrichtung entsprechen kann, auf den zweiten Ventilsitz. Das Mitnehm-Vorspannmittel kann die Anschlagskraft des Ventilgliedes auf den Ventilsitz in der Schließstellung begrenzen, die durch eine elektromagnetische Betätigung des Magnetankers durch den elektromagnetischen Aktor bewirkt wird. Beispielsweise kann die zweite Schließstellung durch Betätigung des Magnetankers mittels des elektromagnetischen Aktors erfolgen. Die Schließstellung kann erreicht werden, indem der Magnetanker durch den Elektromagneten bewegt wird, wobei die Bewegung über das Mitnehm-Vorspannmittel von dem Magnetanker auf den Mitnehmer übertragen wird. Solange das Ventilglied sich frei zwischen dem ersten Ventilsitz und dem zweiten Ventilsitz bewegt, entspricht hierbei die Bewegung des Mitnehmers der Bewegung des Magnetankers. Wenn das Ventilglied in der Mitnahmerichtung in einen Berührkontakt mit einem Ventilsitz gelangt, wird dadurch eine weitere Bewegung des Mitnehmers in der Mitnahmerichtung behindert, wobei eine weitere Bewegung des Magnetankers in der Mitnahmerichtung, beispielsweise in den Spaltraum hinein erfolgen kann. Die Bewegung des Magnetankers in Mitnahmerichtung über die Schließstellung hinaus kann durch das Mitnahme-Vorspannmittel zumindest teilweise oder vollständig aufgenommen werden, ohne dass die Magnetankerbewegung auf das Ventilglied übertragen wird. Auf diese Weise wird die Anschlagswirkung, insbesondere die Anschlagskraft, des Ventilgliedes auf den Ventilsitz in der Mitnahmerichtung begrenzt. Auf diese Weise wird zum einen die Impulskraft des Auftreffens des Ventilgliedes auf den Ventilglied in die Mitnahmerichtung erheblich verringert, weil die relativ zu der Masse des Mitnehmers und Ventilgliedes deutlich höhere Masse des Magnetankers entkoppelt ist, sodass nicht die Masse des Magnetankers Auswirkungen auf die Impulskraft beim Auftreffen des Ventilgliedes auf den Ventilsitz in der Mitnahmerichtung hat. Ferner wird vermieden, dass die Bewegung des Magnetankers in den Spaltraum hinein, einer entsprechende Bewegung oder Verformung des Ventilgliedes zur Folge hat; anders als im Stand der Technik gemäß Figur 9, bei dem eine materialschlüssige, starre Verbindung des Magnetankers zu dem Ventilglied besteht. Ferner wird die Anschlagswirkung des Ventilgliedes in Mitnahmerichtung auf den Ventilsitz entkoppelt von der exponentiell ansteigenden Magnetkraft, die der Elektromagnet auf dem Magnetanker bei kleiner werdendem Spaltraum ausübt. Nicht die magnetische Wirkkraft wird von dem Magnetanker auf den Mitnehmer übertragen, sondern nur die durch diesen (freien) Stellweg im Bereich des Spaltraums bewirkte zusätzliche Federkraft des Mitnehm-Vorspannmittels.

Alternativ oder zusätzlich kann das Rückstell-Vorspannmittel eine Anschlagswirkung, insbesondere die Anschlagskraft, des Ventilgliedes auf einen Ventilsitz entgegen der Mitnahmerichtung begrenzen. Beispielsweise kann das elektropneumatische Magnetventil dazu ausgelegt sein, dass bei Stromlosschalten des elektropneumatischen Aktors allein die Kraft des Rückstell-Vorspannmittels das Ventilglied in einer Schließstellung, beispielsweise in die erste Schließstellung, entgegen einem Ventilsitz, beispielsweise dem ersten Ventilsitz, drängt. Bei einer solchen Ausgestaltung kann das Rückstell-Vorspannmittel durch eine Feder mit linearer Kennlinie oder progressiver Kennlinie ausgelegt sein. In der durch das Rückstell-Vorspannmittel bewirkten Schließstellung, beispielsweise der ersten Schließstellung, ist eine vorbestimmte Schließkraft entsprechend einer Vorspannung des Rückstell-Vorspannmittels bereitgestellt. Die Vorspannkraft des Rückstell-Vorspannmittels kann gemäß einem Vorspann-Feder-Stellweg gewählt sein, der wesentlich kleiner ist als der Stellweg des Ventilgliedes von der ersten Schließstellung zu der zweiten Schließstellung.

Beispielsweise kann der Vorstell-Feder-Stellweg kleiner als 50 %, kleiner als 20 % oder sogar kleiner als 10 % des Stellglied-Stellweges sein. Die durch das Rückstell-Vorspannmittel bereitgestellte Vorspannkraft in dieser Schließstellung entspricht der Anschlagskraft des Ventilgliedes auf den Ventilsitz.

Gemäß einer Ausführung kann ein elektropneumatisches Magnetventil ferner eine zweite Luftkammer und ein darin angeordnetes zweites Ventilglied umfassen. Das zweite Ventilglied kann ebenso wie das erste von dem Mitnehmer getragen sein. Das zweite Ventilglied kann von einem anderen Mitnehmer getragen sein. Der Mitnehmer, insbesondere eine Stellstange, kann gabelförmig sein und mehrere Zinken umfassen, an denen jeweils wenigstens ein Ventilglied getragen sein kann. Das zweite Ventilglied ist insbesondere ein zumindest teilweise elastisches Dichtelement. In die weitere Luftkammer münden drei weitere Luftkanäle. Die weiteren Luftkanäle umfassen einen vierten Luftkanal, einen fünften Luftkanal und einen weiteren Steuerluftkanal. Das zweite Ventilglied verschließt in der ersten Schließstellung den vierten Luftkanal und gibt den fünften Luftkanal frei. In der zweiten Schließstellung verschließt das zweite Ventilglied den fünften Luftkanal und gibt den vierten Luftkanal frei.

Der fünfte Luftkanal kann beispielsweise ein Zuluftkanal sein, der mit einer Pneumatikquelle, wie einem Druckluftreservoir, einem Kompressor oder dergleichen verbunden ist. Der vierte Luftkanal kann ein Abluftkanal sein, der mit einer Drucksenke, wie der Atmosphäre, verbunden ist. Der weitere Steuerluftkanal kann mit einem pneumatischen Aktor verbunden sein, um diesen zu Be- und/ oder Entlüften. Das elektropneumatische Magnetventil ist insbesondere als 5/2-Wegeventil ausgestaltet. Wenn das elektropneumatische Magnetventil als 5/2-Wegeventil ausgestaltet ist, kann das erste Ventilglied derart in der Luftkammer untergebracht sein, dass das Ventilglied entweder den ersten Luftkanal oder den zweiten Luftkanal verschließt, und das zweite Ventilglied kann derart in der weiteren Luftkammer untergebracht sein, dass das zweite Ventilglied entweder den vierten Luftkanal oder den fünften Luftkanal verschließt.

Der Mitnehmer oder der weitere Mitnehmern verbindet das zweite Ventilglied kraftübertragungsgemäß mit dem insbesondere genau einen Magnetanker. Zwischen dem Mitnehmer für das zweite Ventilglied und dem Magnetanker ist wenigstens ein Mitnehm-Vorspannmittel, wie eine Feder, zum Bereitstellen einer Vorspannkraft auf den Mitnehmer in einer Mitnahmerichtung entsprechend der ersten Stellrichtung oder entsprechend der zweiten Stellrichtung angeordnet. Ferner ist wenigstens ein Rückstell-Vorspannmittel, wie eine Rückstellfeder, zum Bereitstellen einer Rückstellkraft auf den Mitnehmer für das zweite Ventilglied entgegen der Mitnahmerichtung vorgesehen. Das Rückstell-Vorspannmittel kann insbesondere zwischen dem Mitnehmer für das zweite Ventilglied und dem elektromagnetischen Aktor, vorzugsweise einem relativ zu der Spule unbeweglichen Kern des elektromagnetischen Aktors, angeordnet sein.

Das elektropneumatische Magnetventil kann n (mehr als zwei) Ventilglieder in n Luftkammern mit jeweiligen Luftkanälen umfassen, wobei die n weiteren Ventilglieder an demselben Mitnehmer oder mehreren insbesondere individuellen Mitnehmern getragen sein können. Die n weiteren Ventilglieder können entsprechend einem oben beschriebenen zweiten Ventilglied in einem elektropneumatischen Magnetventil realisiert sein. Insbesondere kann das elektropneumatische Magnetventil als n/2 Wegeventil realisiert sein.

Gemäß einer Weiterbildung eines elektropneumatischen Magnetventils sind der erste Luftkanal und der fünfte Luftkanal pneumatisch parallel geschaltet. Alternativ oder zusätzlich können der zweite Luftkanal und der vierte Luftkanal parallel geschaltet sein. Beispielsweise können der erste Luftkanal und der fünfte Luftkanal als Belüftungskanäle realisiert sein, die über einen gemeinsamen Speisekanal mit einer Pneumatikquelle verbunden sind. Beispielsweise können der zweite Luftkanal und der vierte Luftkanal als Entlüftungskanäle realisiert sein, die mit einer Pneumatiksenke, insbesondere der Atmosphäre, verbunden sind. Gemäß einer alternativen Weiterbildung eines elektropneumatischen Magnetventils sind der erste Luftkanal und der vierte Luftkanal pneumatisch parallel geschaltet. Alternativ oder zusätzlich können der zweite Luftkanal und der fünfte Luftkanal parallel geschaltet sein. Beispielsweise können der zweite Luftkanal und der fünfte Luftkanal als Entlüftungskanäle realisiert sein, die mit einer Pneumatiksenke, insbesondere der Atmosphäre, verbunden sind.

Gemäß einer Weiterbildung eines elektropneumatischen Magnetventils umfasst der Mitnehmer eine elastische Kopplung zwischen dem ersten Ventilglied und dem zweiten Ventilglied. Gemäß dieser Ausführung sind erstes und zweites Ventilglied an demselben Mitnehmer getragen. Eine elastische Kopplung kann einen Abschnitt des Mitnehmers bilden, der relativ zu dem übrigen Mitnehmer eine erhöhte Elastizität aufweist. Beispielsweise kann die elastische Kopplung eine wenigstens 10%, wenigstens 50% oder wenigstens 100% höhere Elastizität als ein Abschnitt des Mitnehmers zwischen der elastischen Kopplung und/oder dem ersten Venilglied und dem Mitnahme-Vorspannmittel aufweisen. Insbesondere kann die elastische Kopplung eine Anschlagswirkung, insbesondere eine Schließkraft, des weiteren Ventilglied auf wenigstens einen weiteren Ventilsitz begrenzen.

Gemäß einer anderen Weiterbildung eines elektropneumatischen Magnetventils umfasst der Mitnehmer eine starre Kopplung zwischen dem ersten Ventilglied und dem zweiten Ventilglied. Gemäß dieser Ausführung sind erstes und zweites Ventilglied an demselben Mitnehmer getragen. Vorzugsweise ist der gesamte Mitnehmer starr. Insbesondere ist die Elastizität des Mitnehmers zwischen dem zweiten Ventilglied und dem ersten Ventilglied und/oder dem Mitnahme-Vorspannmittel konstant. Insbesondere kann das Mitnehm-Vorspannmittel eine Anschlagswirkung des weiteren Ventilglieds auf einen weiteren Ventilsitz in der Mitnahmerichtung begrenzen und/oder das Rückstell-Vorspannmittel kann eine Anschlagswirkung des weiteren Ventilglieds auf einen weiteren Ventilsitz entgegen der Mitnahmerichtung begrenzen.

Gemäß der Erfindung, umfasst das elektropneumatische Magnetventil eine analoge und/oder digitale Diagnoseelektronik, die,den durch die Spule fließenden Strom erfasst, um auf Basis wenigstens eines ersten lokalen Stromflussminimums korrelierend zu einem Auftreffen des Ventilgliedes auf einen Ventilsitz unter Berücksichtigung einer Anschlags-Zeitdifferenz zwischen dem ersten lokalen Stromflussminimum undeinem zweiten lokalen Stromflussminimum korrelierend zu einem Auftreffen des Magnetankers auf einen Stopper ein Diagnoseergebnis bereitzustellen.

Die Diagnoseelektronik kann dazu ausgestaltet sein, ein Diagnoseergebnis unter Berücksichtigung einer zweiten Zeitdifferenz bereitzustellen, die zwischen dem Auftreten des ersten Stromflussminimums und einem Referenzzeitpunkt besteht, der definiert ist durch das Auftreten des zweiten lokalen Stromflussminimums. Anhand der Zeitdifferenz ist es möglich, eine Aussage über den Verschleißstatus des 3/2-Wegeventiles zu machen. Die Diagnoseelektronik kann dazu ausgelegt sein, eine Warnmeldung oder eine Fehlermeldung auszugeben, wenn die Zeitdifferenz unter ein vorbestimmten Schwellenwert fällt.

Die analoge und/oder digitale Diagnoseelektronik des elektropneumatischen Magnetventils kann insbesondere zur Durchführung eines Diagnoseverfahrens wie nachfolgend beschrieben eingerichtet sein. Zur analogen Diagnose kann der Stromwert über einen Shunt-Widerstand in elektrische Spannung umgewandelt werden und in seinem zeitlichen Verlauf ständig überwacht werden. Durch Differenzierelemente können die Knicke detektiert werden und beispielsweise in Einzelimpulse umgewandelt werden. Ein Zählelement kann die verstrichene Zeit zwischen den beiden Impulsen in einen digitalen oder analogen Wert umwandeln. Zur digitalen Analyse bei Verwendung eines Microprozessors, eines Micro-Controllers oder dergleichen, kann dieser das Spannungssignal am Shunt-Widerstand ständig digital wandeln und durch eine Firmware-Routine die Knicke und deren Zeitunterschied detektieren und auswerten. Durch zusätzliche Dämpfungselemente kann die Zeitdifferenz zwischen den Anschlagsknicken erhöht werden. Somit wird für die Auswerteelektronik eine bessere Detektierbarkeit erreicht. Die Dämpfungselemente können sowohl den Anker bzgl. dem Gehäuse oder die Ventilstange mit dem Dichtelement bzgl. dem Anker dämpfen. Durch eine optimal gewählte Amplitude der Schaltspannung kann der Zeitverlauf des Stromanstiegs ebenfalls optimiert werden.

Die Erfindung betrifft auch ein Feldgerät für eine prozesstechnische Anlage, wie ein Kraftwerk, eine chemische Anlage, eine Lebensmittel verarbeitende Anlage oder dergleichen, umfassend einen insbesondere einfachwirkenden oder doppeltwirkenden, pneumatischen Stellventil-Antrieb und ein elektropneumatisches Magnetventil wie oben beschrieben, wobei der erste Luftkanal ein Belüftungskanal zum Verbinden mit einer Pneumatikquelle und der zweite Luftkanal ein Entlüftungskanal zum Verbinden mit einer pneumatischen Senke ist und wobei der Steuerluftkanal mit einer Steuerluftkammer des Stellventil-Antrieb verbunden ist.

Gemäß einer Ausführung eines Feldgeräts kann der pneumatische Stellventil-Antrieb als einfachwirkender Stellventilantrieb mit Federrückstellung ausgelegt sein. Ein einfachwirkender Stellventilantrieb umfasst vorzugsweise genau eine pneumatisch beaufschlagbare Steuerluftkammer zum Bereitstellen einer Stellventil-Betätigungskraft, die entgegen einer Rückstellkraft der Federrückstellung wirkt. Gemäß dieser Ausführung kann das Magnetventil insbesondere als 3/2-Wegeventil realisiert sein.

Gemäß einer Ausführung eines Feldgeräts mit einem doppeltwirkenden pneumatischen Stellventil-Antrieb und einem elektropneumatische Magnetventil mit einem ersten Ventilglied und einem zweiten Ventilglied, insbesondere wie oben beschrieben, ist der Steuerluftkanal mit einer ersten Steuerluftkammer des Stellventil-Antriebs verbunden ist und der zweite Steuerluftkanal mit einer entgegengesetzt zur ersten Steuerluftkammer wirkenden zweiten Steuerluftkammer verbunden. Gemäß dieser Ausführung kann das Magnetventil insbesondere als 5/2-Wegeventil realisiert sein. Ein doppeltwirkender pneumatischer Stellventilantrieb umfasst vorzugsweise genau zwei entgegengesetzt wirkende Steuerluftkammern zum Betätigen eines Stellventils. Es kann besonders bevorzugt sein, dass bei einem solchen Feldgerät der erste und fünfte Luftkanal als Belüftungskanal und der zweite und vierte Luftkanal als Entlüftungskanal ausgeführt sind. Auf diese Weise kann eine einfache Betätigung des doppeltwirkenden pneumatischen Stellventilantriebs gewährleistet sein, indem das erste Ventilglied entlüftet während das zweite Ventilglied belüftet oder umgekehrt.

Die Erfindung betrifft auch ein Diagnoseverfahren für ein elektropneumatisches Magnetventil eines Feldgeräts einer prozesstechnischen Anlage, wie ein Kraftwerk, eine chemische Anlage, eine Lebensmittel verarbeitende Anlage oder dergleichen. Insbesondere kann das Diagnoseverfahren für ein elektropneumatisches Magnetventil und/oder oder Feldgerät nach wie oben beschrieben ausgelegt sein.

Das Diagnoseverfahren umfasst eine Diagnoseroutine. Gemäß der Diagnoseroutine wird ein elektromagnetischer Aktor mit einem Magnetanker zum Betätigen eines Ventilgliedes aktiviert. Gemäß der Diagnoseroutine wird als erster Referenzzeitpunkt das Auftreffen eines Ventilgliedes auf einen Ventilsitz erfasst und als zweiter Referenzzeitpunkt wird das Auftreffen des Magnetankers auf einen Stopper erfasst, wie ein nicht magnetischer Antihaftkörper, beispielsweise eine Antihaftbeschichtung oder eine Antihaftscheibe, insbesondere an einem ortsfesten Kern des elektromagnetischen Aktors. Gemäß der Diagnoseroutine des Diagnoseverfahrens wird eine Anschlags-Zeitdifferenz zwischen dem ersten Referenzzeitpunkt und dem zweiten Referenzzeitpunkt ermittelt. Die Anschlags-Zeitreferenz soll mit einem vorbestimmten Zeitdifferenz-Referenzwert verglichen werden. Es ist denkbar, dass die Anschlags-Zeitdifferenzen mehrerer nacheinander durchgeführter Diagnoseroutinen miteinander verglichen werden. Es ist auch denkbar, dass eine Kombination der vorgenannten Vergleiche erfolgt, beispielsweise können mehrere unterschiedliche erfasste Zeitdifferenzen unterschiedlicher Diagnoseroutinen untereinander verglichen werden. Anhand des Vergleichs eines oder mehrerer Anschlags-Zeitdifferenzwerte, die in einer oder mehrerer Diagnoseroutinen des Diagnoseverfahrens erfasst sind, kann eine Aussage über den Verschleißzustand des elektropneumatischen Magnetventils gemacht werden. Das erfindungsgemäße Diagnoseverfahren erlaubt daher eine kontinuierliche Überwachung des Betriebszustandes des 3/2-Wegeventils während des laufenden Betriebes, sodass das Magnetventil über seine gesamte sichere Lebensdauer genutzt werden kann. Die Überwachung der Funktionalität und des Verschleißzustands des elektromagnetischen Magnetventils erlaubt ferner einen besonders sicheren Betrieb, weil ein unerwartetes Versagen in Folge von Verschleiß sicher ausgeschlossen werden kann.

Es sei klar, dass die Benennung der Referenzzeitpunkte als "erster" oder "zweiter" Referenzzeitpunkt, sowie gegebenenfalls "dritter", "vierter" oder weiterer Referenzzeitpunkt nicht in einem Zusammenhang mit einem zeitlichen Auftreten der Referenzzeitpunkte steht. Vielmehr ist durch die unterschiedliche Benennung klargestellt, dass unterschiedliche Referenzzeitpunkte zu unterschiedlichen diagnoserelevanten Ereignissen korrelieren und den speziellen diagnoserelevanten Ereignissen jeweils ein bestimmter einzelner Referenzzeitpunkt zugeordnet sein kann.

Bei einer Ausführung eines Diagnoseverfahrens wird bei der Diagnoseroutine als vierter Referenzzeitpunkt das Auftreffen eines weiteren Ventilgliedes auf einen weiteren Ventilsitz erfasst. Dabei wird insbesondere wenigstens eine weitere Anschlags-Zeitdifferenz zwischen dem vierten Referenzzeitpunkt und dem ersten Referenzzeitpunkt und/oder dem zweiten Referenzzeitpunkt ermittelt. Gemäß einer Ausführung des Diagnoseverfahrens kann zum Aktivieren des elektromagnetischen Aktors Strom durch eine Spule des Aktors fließen und der erste Referenzzeitpunkt und/oder der zweite Referenzzeitpunkt und/oder der vierte Referenzzeitpunkt können auf Basis eines lokalen (ersten, zweiten und/oder dritten) lokalen Minimums des Stromflusses durch die Spule erfasst werden. Der Stromfluss durch die Spule des elektromagnetischen Aktors steht in einem Zusammenhang zu der Bewegung und der Position des Magnetankers relativ zu dem elektromagnetischen Antrieb. Wenn der Magnetanker, beispielsweise beim Auftreffen des Ventilgliedes auf einen Ventilsitz und/oder beim Ende der freien Bewegung des Magnetankers, eine Abbremsung erfährt, tritt korrelierend zu der Abbremsung ein zeitlich lokales Stromflussminimum des durch die Spule fließenden Stroms auf. Beispielsweise kann das Diagnoseverfahrens unter Berücksichtigung einer Zeitdifferenz zwischen wenigstens einem (ersten) lokalen Stromflussminimum und einem Referenzzeitpunkt erfolgen. Der Referenzzeitpunkt kann vorbestimmt sein. Insbesondere kann auf Basis von wenigstens zwei lokalen Stromflussminima, einem ersten lokalen Stromflussminimum und einem zweiten lokalen Stromflussminimum ein Diagnoseverfahren erfolgen. Das Diagnoseverfahren kann unter Berücksichtigung einer zweiten Zeitdifferenz erfolgen, die zwischen dem Auftreten des ersten Stromflussminimums und einem Referenzzeitpunkt besteht, der definiert ist durch das Auftreten des zweiten lokalen Stromflussminimums. Gemäß einer Ausführung des Diagnoseverfahrens, die mit der vorherigen kombinierbar ist, kann für das Diagnoseverfahren als dritter Referenzzeitpunkt das Lösen des Ventilgliedes von einem zweiten Ventilsitzes erfasst werden. Es kann eine Bewegungs-Zeitdifferenz zwischen dem ersten Referenzzeitpunkt und dem dritten Referenzzeitpunkt erfasst werden, auf deren Basis eine weitere Diagnosefunktion durchgeführt werden kann. Beispielsweise kann anhand eines Vergleichs der erfassten Bewegungs-Zeitdifferenz im Vergleich zu einer Bewegung-Zeitdifferenz-Referenz und/oder Bewegungs-Zeitdifferenz-Werten einer oder mehrere unterschiedlicher anderer Diagnoseroutinen ermittelt werden, ob sich das Ventilglied ungehindert von dem ersten Ventilsitz und dem zweiten Ventilsitz bewegen kann. Insbesondere kann als fünfter Referenzzeitpunkt das Lösen des weiteren Ventilgliedes von einem anderen weiteren Ventilsitz erfasst werden.

Gemäß einer Ausführung eines Diagnoseverfahrens, das mit der vorherigen kombinierbar ist, werden mehrere Diagnoseroutinen nacheinander durchgeführt, wobei die Anschlags-Zeitdifferenzen der mehreren Diagnoseroutinen berücksichtigt, insbesondere miteinander verglichen werden.

Gemäß einer Ausführung eines Diagnoseverfahrens wird als Diagnoseergebnis eine Verschleißzustandswarnung erzeugt, wenn die Anschlags-Zeit-Differenz wenigstens einer Diagnoseroutine gegen Null geht oder gleich Null ist. Beispielsweise kann eine Verschleißzustandswarnung erzeugt werden, wenn bei der Durchführung des Diagnoseverfahrens anders als erwartet keine zwei lokalen Stromflussminima auftreten, sondern nur eines, weil dies darauf schließen lässt, dass das elektropneumatische Magnetventil nicht ordnungsgemäß funktioniert. Beispielsweise kann das Ventilglied und/oder der Ventilsitz defekt sein, dass ein sicheres Schließen des Ventilgliedes nicht mehr gewährleistet ist. Es ist auch denkbar, dass ein Fremdkörper zwischen dem Magnetanker und dem elektromagnetischen Aktor oder zwischen dem Ventilsitz und das Ventilglied geraten ist, sodass eine ordnungsgemäße Bewegung nicht länger möglich ist. Eine Verschleißzustandswarnung kann aber bereits dann ausgegeben werden, wenn beispielsweise bei der Auswertung der Anschlags-Zeitdifferenzen mehrerer nacheinander erfolgten Diagnoseroutinen einen Trend und/oder Lauf erkennen lässt, gemäß dem die Anschlags-Zeitdifferenz eine kritische Änderung erfährt, also beispielsweise sinkt, also gegen Null geht.

Gemäß einer Ausführung eines Diagnoseverfahrens, das mit dem vorherigen kombinierbar ist, kann als Diagnoseergebnis eine Fehlfunktionswarnung erfolgt werden, wenn eine zweite Zeitdifferenz zwischen zwei Referenzzeitpunkten während wenigstens einer Diagnoseroutine einen Grenzwert überschreitet. Dabei kann eine zweite oder weitere Zeitdifferenz zwischen dem ersten Referenzzeitpunkt und dem dritten Referenzzeitpunkt oder zwischen dem zweiten Referenzzeitpunkt und dem dritten Referenzzeitpunkt erfasst werden und mit einem zugeordneten Grenzwert verglichen werden. Es ist auch denkbar, dass der erste Referenzzeitpunkt, der zweite Referenzzeitpunkt und/oder der dritte Referenzzeitpunkt mit einem anderen, beispielsweise vorbestimmten, vierten Referenzzeitpunkt verglichen und die Zeitdifferenz mit einem zugeordneten Grenzwert verglichen wird.

Weitere Merkmale, Eigenschaften und Vorteile der Erfindung werden durch die folgende Beschreibung einer bevorzugten Ausführung und der beiliegenden Zeichnungen deutlich, in denen zeigen:
- Figur 1: eine Schnittdarstellung eines erfindungsgemäßen elektropneumatischen Magnetventils in der ersten Schließstellung;
- Figur 2a: ein Teilschnitt des erfindungsgemäßen Magnetventils gemäß Figur 1 in der zweiten Schließstellung;
- Figur 2b: das erfindungsgemäße Magnetventil gemäß Figur 1 in der zweiten Schließstellung, wobei der Magnetanker seine Endposition erreicht hat;
- Figur 3a: ein Weg-Zeit-Diagramm, das die Position des Magnetankers ausgehend von der ersten Schließstellung in der Mitnahmerichtung zeigt;
- Figur 3b: ein Weg-Zeit-Diagramm, das die Position des Ventilglieds des erfindungsgemäßen Magnetventils gemäß Figur 1a ausgehend von der ersten Schließstellung in der zweiten Stellrichtung zeigt;
- Figur 3c: ein Strom-Zeit-Diagramm, das den Stromfluss durch die Magnetspule des elektropneumatischen Stellgerätes gemäß Figur 1 bei der Bewegung des Ventilgliedes von der ersten Schließstellung zur zweiten Schließstellung darstellt;
- Figur 4a: ein Weg-Zeit-Diagramm der Magentankerposition für ein defektes elektropneumatisches Stellgerät;
- Figur 4b: ein Weg-Zeit-Diagramm der Ventilgliedposition für ein defektes elektropneumatisches Stellgerät;
- Figur 4c: ein Strom-Zeit-Diagramm für ein defektes elektropneumatisches Stellgerät gemäß Figur 1;
- Figur 5: eine Schnittdarstellung eines anderen erfindungsgemäßen elektropneumatischen Magnetventils in der zweiten Schließstellung;
- Figur 6a: eine Schnittdarstellung eines weiteren erfindungsgemäßen Magnetventils mit mehreren Ventilgliedern in der zweiten Schließstellung, wobei der Magnetanker seine Endposition erreicht hat;
- Figur 6b: das Magnetventil gemäß Figur 6a in der zweiten Schließstellung, wobei der Magnetanker in Kontakt mit dem Anschlag steht;
- Figur 6c: eine Schnittdarstellung des Magnetventils gemäß Figur 6a in einem Zustand, in dem das erste Ventilglied aus einer Schließposition gelöst ist;
- Figur 6d: eine Schnittdarstellung des Magnetventils gemäß Figur 6a in einem Zustand, in dem beide Ventilglieder aus einer Schließposition gelöst sind;
- Figur 7: ein Strom-Zeit-Diagramm, das den Stromfluss durch die Magnetspule des elektropneumatischen Stellgerätes gemäß der Figuren 6a bis 6d bei der Bewegung des Ventilgliedes von der ersten Schließstellung zur zweiten Schließstellung darstellt;
- Figur 8: eine Schnittdarstellung eines anderen erfindungsgemäßen Stellventils mit mehreren Ventilgliedern
- Figur 9: ein konventionelles elektropneumatisches 3/2-Wegeventil in einer ersten Schließstellung; und
- Figur 10: das konventionelle 3/2-Wegeventil gemäß Figur 9 in einer zweiten Schließstellung.

Bei der nachfolgenden Beschreibung bevorzugter Ausführungen der Erfindung anhand exemplarischer Ausführungen, wie in den Figuren, sind dieselben oder ähnliche Komponente zur Vereinfachung der Lesbarkeit mit denselben oder ähnlichen Bezugszeichen ausgestattet.

Ein erfindungsgemäßes elektropneumatisches Magnetventil, welches gattungsgemäß als 3/2-Wegeventil ausgestaltet ist, trägt im Allgemeinen das Bezugszeichen 1. Als wesentliche Komponenten umfasst das Magnetventil 1 einen elektropneumatischen Aktor 3, der vorliegend als Linearaktor ausgebildet ist, und eine Luftkammer 5 mit genau drei darin mündenden Luftkanälen, nämlich einem ersten Luftkanal 11, der als Belüftungskanal ausgeführt ist und mit einer Pneumatikquelle verbunden ist, einem zweiten Luftkanal 21, der als Entlüftungskanal ausgeführt ist und mit der Atmosphäre verbunden ist, sowie einem dritten Luftkanal, der als Steuerluftkanal 51 ausgebildet ist und mit einem pneumatischen Aktor verbunden ist (nicht im Detail dargestellt).

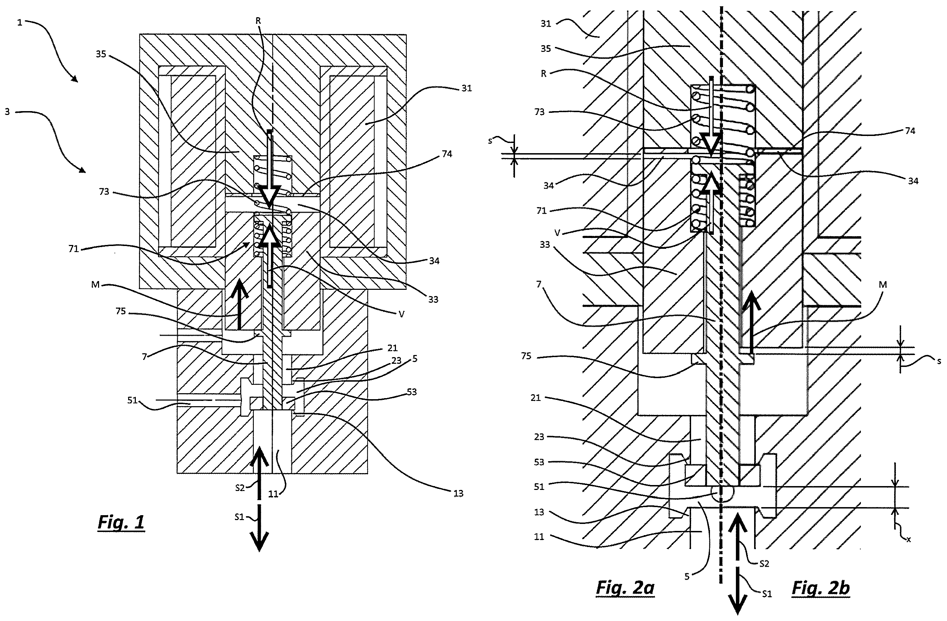

Bei dem elektropneumatischen Magnetventil 1 bleibt der Steuerluftkanal 51 unabhängig von der Stellung des Ventilgliedes 53 innerhalb der Luftkammer 5 stets geöffnet. Das Magnetventil 1 hat eine erste Schließstellung (Figur 1), in der der Belüftungskanal 11 durch das Ventilglied 53 verschlossen ist. Das Magnetventil 1 hat eine zweite Schließstellung (Figur 2a und 2b), in der das Ventilglied 53 den Entlüftungskanal 21 verschließt. Das Magnetventil wird durch eine Bewegung des Ventilgliedes 53 in die erste Stellrichtung S1 in die erste Schließstellung (Figur 1) verbracht. Das Magnetventil 1 wird durch eine Bewegung des Ventilgliedes 53 in der zweiten Stellrichtung S2 in die zweite Schließstellung (Figur 2a, Figur 2b) verbracht. Eine Bewegung des Ventilgliedes 53 in Richtung des ersten Ventilsitzes 13, welcher die Mündung des ersten Luftkanals 11 umgibt, ist in der dargestellten exemplarischen Ausführung eine Bewegung des Ventilgliedes 53 in eine erste Stellrichtung S1. Eine Bewegung des Ventilgliedes 53 in Richtung eines zweiten Ventilsitzes 23, welcher die Mündung des zweiten Lüftungskanals 21 in die Luftkammer 5 umgibt, realisiert in der in Figur 1 abgebildeten Ausführung eine Stellbewegung in eine zweite Stellrichtung S2.

Das Ventilglied 53 ist starr an einen Mitnehmer gekoppelt, der bei der in den Figuren dargestellten exemplarischen Ausführungen als Stellstange 7 realisiert ist. Die Stellstange 7 ist relativ zu dem Gehäuse des Magnetventils 1 für eine Linearbewegung in der ersten Stellrichtung S1 und/oder in der zweiten Stellrichtung S2 beweglich gelagert. Die Stellstange 7 ist mithilfe eines durch eine Spiralfeder 71 realisierten Mitnahme-Vorspannmittels kraftübertragungsgemäß mit einem Magnetanker 33 des elektromagnetischen Aktors 3 verbunden.

Der elektromagnetische Aktor umfasst eine Spule 31, durch die ein Steuerstrom I fließen kann, um ein elektromagnetisches Feld aufzubauen, unter dessen Einwirkung der Magnetanker 33 betätigbar ist. Bei der in Figur 1, Figur 2a und Figur 2b dargestellten exemplarischen Ausführung eines elektromagnetischen Aktors 3 als Linearaktor ist der Magnetanker 33 koaxial innerhalb der Magnetspule 31 angeordnet. Die Rotations-Symmetrie-Achse der Spule kann, wie abgebildet, der Rotations-Symmetrie-Achse der Stellstange 7 und/oder des Ventilgliedes 53 entsprechen. Die Stellstange 7 ist linear beweglich und mit ihr das Ventilglied 53.

Zur Betätigung des elektropneumatischen Stellgerätes 1 fließt ein elektrischer Strom I durch die Spule 31 des Magnetaktors 3. Das durch die Aktivierung der Magnetspule 31 erzeugte elektromagnetische Fell bewirkt eine, gegebenenfalls durch einen Magnetkern 35 verstärkte, magnetische Anziehungskraft auf den linearbeweglichen Magnetanker 33. Die magnetische Anziehungskraft des Magnetaktors 3 auf den Magnetanker 33 bewirkt eine Bewegung des Magnetankers 33 in der Mitnahmerichtung M. Die Bewegung des Magnetankers 33 wird über das Mitnehm-Vorspannmittel 71 übertragen an dem Mitnehmer 7, also die Stellstange, die das Ventilglied 53 trägt. Bei der abgebildeten Ausführung entspricht die Mitnahmerichtung M der zweiten Stellrichtung S2. Wenn bei der abgebildeten Ausführung die Magnetspule 31 zur Betätigung des Magnetankers 33 aktiviert wird, kann diese eine Bewegung des Magnetankers 33 in der Mitnahmerichtung M (bei der dargestellten Abbildung nach oben) und eine entsprechende, gleichgerichtete Bewegung des Ventilgliedes 53 in der zweiten Stellrichtung S2 Folge haben. Bei aktiviertem elektromagnetischem Aktor 3 können sich Magnetanker 33, Mitnehmer 7 und Ventilglied 53 ausgehend von der ersten Schließstellung entlang einem Ventilstellweg x in der zweiten Stellrichtung (nach oben) bewegen, bis das Ventilglied 53 die zweite Schließstellung erreicht (Figur 2a). Das Ventilglied 53 erreicht die zweite Schließstellung, wenn es mit dem zweiten Ventilsitz 23 in Eingriff gelangt, der die Mündung des zweiten Luftkanals 21 in die Luftkammer 5 bildet.

Dank der Entkoppelung des Mitnehmers 7 von dem Magnetanker 33 durch das dazwischen angeordnete und verspannte Mitnahme-Vorspannmittel 71, kann der Magnetanker 33 sich weiter in seiner Mitnahmerichtung M bewegen. Nachdem durch die gemeinsame Bewegung von Magnetanker 33, Ventilglied 53 und Mitnehmer 7 in der Mitnahmerichtung M das Ventilglied 53 im Eingriff mit dem Ventilsitz 23 gelangt ist, und keine Bewegung vollführen kann, kann der Magnetanker 33 sich weiter entlang eines freien Stellweges s bewegen. Die Bewegung des Magnetankers 33 entlang des freien Stellweges s kann gehindert durch eine Federung, eine Dämpfung oder dergleichen, oder ungehindert erfolgen.

Der Magnetanker 33 kann sich weiter in Mitnahmerichtung M bewegen, bis die Bewegung des Magnetankers 33 relativ zu der Magnetspule 31 gestoppt wird (Figur 2b). Bei der abgebildeten Ausführung stößt der Magnetanker 33 gegen einen nichtmagnetischen Stopper 74 in dem Spaltraum 34 zwischen dem Magnetanker 33 und dem Magnetkern 35. Der nicht-magnetische Stopper 74 verhindert einen Berührkontakt zwischen den ferromagnetischen Bauteilen des Magnetankers 33 und des Magnetkerns 35.

Während der Bewegung des Magnetankers 33 entlang der freien Wegstrecke s befinden sich das Ventilglied 53 und der Mitnehmer 7 in einer relativ zum Gehäuse des Magnetventils 1 ortsfesten Position. Da der Magnetanker 33 sich über das Mitnahme-Vorspannmittel 71 an dem Mitnehmer 7 abstützt, wird das Mitnahme-Vorspannmittel 71 entsprechend des freien Stellweges s, welchen der Magnetanker 33 absolviert, komprimiert. Der Hub oder freie Stellweg s entspricht dabei einem Federweg des Mitnahme-Vorspannmittels 71. Durch die Bewegung des Mitnehmers 33 entlang der freien Wegstrecke 33 wird eine Schließkraft auf das Ventilglied 53 ausgeübt, die der freien Wegstrecke s multipliziert mit der Federkonstante des Mitnahme-Vorspannmittels 71 entspricht. Diese Schließkraft kann um ein Vielfaches geringer sein, als die auf den Magnetanker 33 wirkende Magnetkraft bei sehr naher Annäherung an den Magnetkern 35.

In der Mitnahmerichtung M drückt das Mitnahme-Vorspannmittel 71 mit der Vorspannkraft V gegen den Mitnehmer 7. Entgegen der Mitnahmerichtung M wirkt bei der abgebildeten Ausführung gemäß der Figuren 1, 2a und 2b das Rückstell-Vorspannmittel 73 mit der Rückstellkraft R von dem ortsfesten Magnetskern 35 auf den Mitnehmer 7.

Wenn bei den in den Figuren 2a und 2b abgebildeten Ausführungen des elektropneumatischen Magnetventils 1 der elektromagnetische Aktor 3 deaktiviert wird, indem der Stromfluss durch die Spule 31 beendet oder unterbrochen wird, verschwindet die magnetische Anziehungskraft auf den Magnetanker 33 in der Mitnahmerichtung M. Die entgegen der Mitnahmerichtung M gerichteten Vorspannkräfte der Rückstell-Spiralfeder 73 und die in der Stellung gemäß Figur 2b wirkende Vorspannkraft des Mitnahme-Vorspannmittels 71 bewirken dann eine Bewegung des Magnetankers 33 entgegen der Mitnahmerichtung M (nach unten).

Das zwischen dem Mitnehmer 7 und dem Magnetanker 33 verspannte Mitnahme-Vorspannmittel 71 bewegt den Magnetanker 33 entgegen der Mitnahmerichtung M bis zu einem an dem Mitnehmer 7 ausgebildeten Anschlag 75. Der Anschlag 75 begrenzt die Linearbeweglichkeit des Magnetankers 33 relativ zu dem Mitnehmer 7 entgegen der Mitnahmerichtung M. Der Mitnehmer 7, der Anschlag 75, das Mitnahme-Vorspannmittel 71 und der Magnetanker 33 können derart aufeinander abgestimmt sein, dass konstruktiv sichergestellt ist, dass sich das Mitnahme-Vorspannmittel 71 stets an einem insbesondere verspannten Berührkontakt mit sowohl einerseits dem Mitnehmer 7 als auch andererseits dem Magnetanker 33 befindet. Wenn der Magnetanker 33 sich in einem Berührkontakt mit dem nicht-magnetisierbaren Stopper 74 befindet, ist der Magnetanker 33 von dem Anschlag 75 an dem Mitnehmer 7 um dem freien Stellweg s angehoben.

Das Rückstell-Vorspannmittel 73 ist derart ausgelegt, dass es (i.) den Magnetanker 33 ausgehend von der zweiten Schließstellung (Figur 2a, Figur 2b) entgegen der Mitnahmerichtung M bis in die zweite Schließstellung (Figur 1) verbringen kann und/oder (ii.) in der zweiten Schließstellung einer Schließkraft zum Andrücken des Ventilgliedes 53 gegen den ersten Ventilsitz 13 bereitstellen kann.

Das Rückstell-Vorspannmittel 73 ist im Allgemeinen kraftübertragungsgemäß zwischen dem beweglichen Ventilglied 53 und einem ortsfesten Teil des elektropneumatischen Magnetventils 1 vorgesehen. Das Rückstell-Vorspannmittel 73 kann beispielsweise einerseits am Ventilglied 53, am Mitnehmer 7 oder am Magnetanker 33 abgestützt sein. Das Rückstell-Vorspannmittel 73 kann andererseits beispielsweise an einem Gehäuseabschnitt des Magnetventils 1, oder an einem ortsfesten Teil des elektromagnetischen Aktors 3, beispielsweise dem Magnetkern 35 abgestützt sein. Das insbesondere spiralfederartige Rückstell-Vorspannmittel 73 kann verspannt zwischen dem Magnetanker 33 und einem ortsfesten Gegenlager des elektropneumatischen Magnetventils 1 angeordnet sein. Bei den in den Figuren dargestellten exemplarischen Ausführungen stützt sich das Rückstell-Vorspannmittel 73 einerseits an dem Mitnehmer 7 und andererseits an dem Magnetkern 35 ab. Wenn das Rückstell-Vorspannmittel 73 dem Mitnehmer 7 in der ersten Stellrichtung S1 bewegt, wird bei der vorliegenden Ausführung der Magnetanker 33 von dem Mitnehmer 7 mittels des Mitnahme-Vorspannmittels 71 mitbewegt.

In der ersten Schließstellung (Figur 1) stellt das Rückstell-Vorspannmittel 73 eine Vorspannkraft auf dem Mitnehmer 7 und das damit verbundene Ventilglied 53 bereit, was einen abdichtenden Berührkontakt des Ventilgliedes 53 mit dem Ventilsitz 13 an der Mündung des ersten Luftkanals 11 in die Luft 5 bewirkt. Der Federweg des Rückstell-Vorspannmittels 73 entspricht der Stellwegstrecke x des Ventilgliedes 53 zwischen dem ersten Ventilsitz 13 und dem zweiten Ventilsitz 23.

Das in Figuren 1, 2a und 2b dargestellte elektropneumatische Magnetventil 1 ist stromlos öffnend ausgelegt, sodass bei einem Ausfall des Stromflusses I durch die Spule 31 das Rückstell-Vorspannmittel 73 das Ventilglied 53 in die den Belüftungskanal 21 öffnende erste Schließstellung S1 verbringt. Es ist im Rahmen der Erfindung denkbar, dass ein erfindungsgemäßes pneumatisches Magnetventil als stromlos schließendes Magnetventil ausgeführt wird, beispielsweise dergestalt, dass im stromlosen Zustand das Rückstell-Vorspannmittel den Entlüftungskanal verschließt; was beispielsweise dadurch realisiert sein kann, dass der zweite Luftkanal 21 ein mit einer Pneumatikquelle verbundener Belüftungskanal ist und der erste Luftkanal 11 ein mit einer pneumatischen Senke verbundene Entlüftungskanal ist.

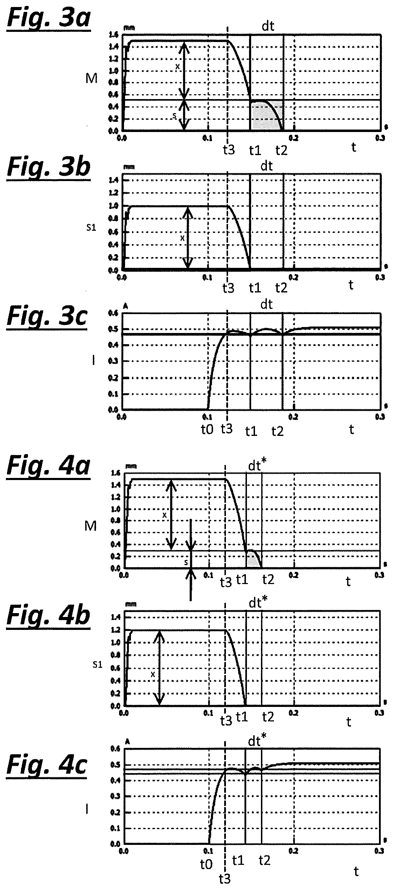

Figur 3a zeigt ein Weg-Zeit-Diagramm der in Position des Magnetankers 33, wobei als Referenzpunkt (Abstand 0) die in Figur 2b dargestellte End-Anschlagsposition des Magnetankers 33 dient und der Abstand des Magnetankers weg von dem Anschlagspunkt dargestellt ist. Figur 3b zeigt ein Weg-Zeit-Diagramm des Ventilgliedes 53, wobei der o-Punkt die zweite Schließstellung gemäß den Figuren 2a und 2b ist, von denen ausgehend der Abstand des Ventilgliedes 53 relativ zu dem zweiten Ventilsitz 23 in der ersten Stellrichtung S1 dargestellt ist. Figur 3c zeigt ein Stromfluss-Zeit-Diagramm, wobei der Stromfluss durch die Spule 31 dargestellt ist. Die in den Diagrammen dargestellten Zahlen sind als qualitative Vergleichswerte zu verstehen.

Die Figuren 3a, 3b und 3c beziehen sich auf ein voll funktionstüchtiges erfindungsgemäßes elektropneumatisches Magnetventil. Die Figuren 4a, 4b und 4c beziehen sich auf ein defektes erfindungsgemäßes elektropneumatisches Magnetventil.

Figur 3c zeigt den Stromfluss I durch die elektromagnetische Spule 31 beim Betätigen des elektropneumatischen Magnetventils 1 ausgehend von der ersten Schließstellung (Figur 1) oder Ruhestellung, bei der das Ventilglied 53 durch die Kraft des Rückstell-Vorspannmittels 73 positioniert ist.

Ab dem Zeitpunkt to (0,1 Sekunde) steigt der Stromfluss I durch die Spule 31. Wie in den Figuren 3a und 3b zu erkennen ist, erfolgt zum Zeitpunkt to bis zum Zeitpunkt t3 noch keine Bewegung des Ventilgliedes. Wie in der Figur 3b zu erkennen ist, beginnt die Bewegung des Ventilgliedes ab dem Zeitpunkt t3. Zwischen dem Zeitpunkt to und dem Zeitpunkt t3 steigt der Stromfluss I an. Dadurch bewirkt die elektromagnetische Spule 31 eine zunehmend größer werdende magnetische Kraft, welche auf den in der Schließstellung (Figur 1) befindlichen Magnetanker 33 wirkt. Zum Zeitpunkt t3 ist die magnetische Stellkraft ausreichend groß, um die Vorspannkraft R der Rückstell-Vorspannfeder 73 zu überwinden, welche in der Schließstellung (Figur 1) auf dem Mitnehmer 7 und das Ventilglied 53 wirkt, um es gegen den ersten Ventilsitz 13 zu pressen. Der Magnetaktor 3 bewirkt ab t3 eine Bewegung von Magnetanker 33, Mitnehmer 7 und Ventilglied 53 in die zweite Stellrichtung S2.

Zwischen dem Zeitpunkt t3, der das Loslösen des Ventilgliedes 53 von dem ersten Ventilsitz 13 entspricht, und dem Zeitpunkt 11, bewegt sich das Ventilglied entgegen der ersten Stellrichtung S1 auf den zweiten Ventilsitz 53 zu. Zum Zeitpunkt t1 gelangt das Ventilglied 53 in Berührkontakt mit dem zweiten Ventilsitz 23 des zweiten Luftkanals 21, und die Stellbewegung des Ventilgliedes 53 endet. Die Wegstrecke x, die zwischen dem Zeitpunkt t3 und dem Zeitpunkt t1 erfolgt (Figur 3b), entspricht der Wegstrecke x des Ventilgliedes zwischen der ersten Schließstellung am ersten Ventilsitz 13 (Figur 1) und der zweiten Schließstellung des Ventilgliedes 53 am zweiten Ventilsitz 23 (Figur 2a, 2b). Nach dem Zeitpunkt t1 steht das Ventilglied 53 in Berührkontakt mit dem zweiten Ventilsitz 23 still.

Dank der Entkopplung des Magnetankers 33 von dem starr mit dem Ventilglied 53 verbundenen Mitnehmer 7 kann sich der Magnetanker auch nachdem das Ventilglied 53 zum Zeitpunkt t1 die zweite Schließstellung (Figur 2a) erreicht weiter in der Mitnahmerichtung bewegen, bis der Magnetanker 33 zum Zeitpunkt t2 an einen Endanschlag 74 stößt. Dieser Bewegung des Magnetankers 33 wirkt das Mitnahme-Rückstellmittel 71 entgegen. Wie in Figur 3a in Korrelation zu Figur 3c zu erkennen ist, verbleibt nach dem Erreichen der Schließstellung gemäß Figur 2a der Magnetanker 33 zunächst in einen Berührkontakt mit dem Mitnahmeanschlag 75. Gegebenenfalls kann der Magnetanker 33 zum Zeitpunkt t1, wenn das Ventilglied 53 den Ventilsitz erreicht, kurzzeitig überschwingen. Der Magnetanker 33 löst sich erst nach dem Zeitpunkt t1 langsam von dem Anschlag 75, wenn der Stromfluss I in der Spule 31 eine ausreichend hohe Magnetkraft bereitstellt, um auch die Rückstellkraft V des Mitnahme-Vorspannmittels 71 zu überwinden. Anschließend verlässt der Magnetanker 33 den Anschlag 75 und bewegt sich bis hin zum Stopper 74 in der Mitnahmerichtung M. Wenn der Stromwert I erreicht ist, bei dem sich der Anker 33 anfängt zu bewegen, wird die Induktivität des Systems sofort größer, da sich der Luftspalt zu verkleinern beginnt. Die Stromanstiegsgeschwindigkeit nimmt ab und wechselt sogar ihre Richtung, da das Magnetsystem nun eine Gegenspannung induziert. Dies führt dazu, dass das Strommaximum in der Kurve kurz nach dem Beginn der Ankerbewegung erreicht wird. Danach sinkt der Strom wieder solange ab, bis der Anker an seinem mechanischen Anschlag anschlägt. Der Knick in der Kurve kennzeichnet den Aufschlagpunkt des Ankers.

Zum Zeitpunkt t2 erreicht der Magnetanker 33 seinen finalen Endanschlag an einem Stopper 74, der eine nicht-magnetische und nicht-magnetisierbare Barrie zwischen dem Magnetanker 33 und dem Magnetkern 35 bildet. Solange ein ausreichend hoher Steuerstrom I fließt, bleibt der Magnetanker 33 in dieser Endposition (Figur 2b).

Bei konstanten Verfahrensparametern (Rückstellkraft R des Rückstell-Vorspannmittels, Rückstellkraft V des Mitnahme-Vorspannmittels freier Stellweg s, Ventilstellweg x, Betätigungsenergie (Strom U), etc.) ist bei einem vollfunktionstüchtigen elektropneumatischen Magnetventil 1 zu erwarten, dass der Verlauf der Stromfluss-Kurve abhängig von der Zeit t bei jedem Betätigungszyklus gleichartig verläuft. Kleinere Toleranzen können auftreten. Die durch momentane Kräftegleichgewichte gekennzeichneten Referenzzeitpunkt to, t1, t2 und/oder t3 erfolgen bei konstanten Prozessparametern reproduzierbar in für jeden Zyklus (d.h. jede Diagnoseroutine) gleich bleibend langen Zeitabständen relativ zueinander.

Beispielsweise ist zu erwarten, dass die Zeitdifferenz dt zwischen dem ersten Referenzzeitpunkt t1 und dem zweiten Referenzzeitpunkt t2, bei einem funktionstüchtigen elektropneumatischen Magnetventil für unterschiedliche Betätigungszyklen gleich groß bleibt, gegebenenfalls unter der Berücksichtigung von geringfügigen Toleranzen. Die Erfinder haben herausgefunden, dass auf Basis eines hinreichend langen Zeitraumes dt zwischen den Referenzzeitpunkten t1 und t2 darauf geschlossen werden kann, dass der Spaltraum 34 zwischen dem Magnetanker 33 und dem Magnetkern 35 hinreichend groß und ein darin eventuell vorgesehener Stopper 74 nicht oder zumindest nicht übermäßig verschlissen ist. Der erste Knick bei t1 (0,15s) charakterisiert das Anschlagen des Dichtelements an den oberen Sitz 13, der zweite Knick bei t2 (0,1875s) das Anschlagen des Ankers 33 an die Antiklebscheibe 74. Die Zeitdifferenz dt zwischen den beiden Anschlägen (37,5ms) ist charakteristisch für ein neues, noch nicht verschlissenes Ventil. Verändert sich nun durch Verschleiß der Hub des Sitzes (Setzeffekt), so verändert sich auch die Zeitdifferenz dt zwischen den beiden Knicken.

Anhand einer Zeitdifferenz zwischen Referenzzeitpunkt t1 und dem Referenzzeitpunkt t3 und/oder zwischen dem Referenzzeitpunkt t1 und dem Referenzzeitpunkt to kann ermittelt werden, ob der Stellweg x des Ventilgliedes 53 zwischen dem ersten Ventilsitz 13 und dem zweiten Ventilsitz 23 frei ist und die Bewegung von Ventilglied 53 und Mitnehmer ungehindert sind. Falls die Zeitdifferenz zwischen dem Referenzzeitpunkt t1 und einem Referenzzeitpunkt to und/oder t3 auffällig klein ist, beispielsweise wenn die Differenzzeit einen Mindest-Schwellwert unterschreitet, kann auf einen Bruch einer der Federn geschlossen werden. Falls der Zeitraum zwischen dem Referenzzeitpunkt t1 und einem der Referenzzeitpunkte to und/oder t3 auffällig lang wird, beispielsweise oberhalb eines Maximal-Schwell-Wertes liegt, kann darauf geschlossen werden, dass ein Hindernis die Bewegung des Mitnehmers- und/oder des Ventilgliedes 53 stört oder eine unerwünscht hohe Reibkraft auf den Mitnehmer 7 wirkt.

Die Figuren 4a, 4b und 4c zeigen die Diagramme eines defekten elektropneumatischen Magnetventils. Die Zeitdifferenz dt* zwischen dem Referenzzeitpunkt t1 und t2 hat sich auffällig verringert. Die Zeitdifferenz dt* ist kleiner als ein Schwellenwert. Dieser Schwellenwert kann ein vorgegebener Schwellenwert sein. Der Schwellenwert kann bei Durchführung des Diagnoseverfahrens durch Vergleich zu einer Referenz-Zeitdifferenz dt einer oder mehrere vorherigen Diagnoseroutinezyklen festgelegt werden. Der Hub x des Ventilgliedes 53 hat sich durch Verschleiß vergrößert, der Ankerhub s ist dagegen gleich geblieben. Die Zeitdifferenz dt* zwischen Anschlag des Dichtelements 53 und dem Ankeranschlag hat dt (37,5 ms) kritisch auf dt* (19,1 ms) verkürzt. Bei einer Messung von auffälligeren Werten, wie in den Figuren 4a, 4b und 4c dargestellt, ist ein Austausch der elektropneumatischen Magnetventils erforderlich.

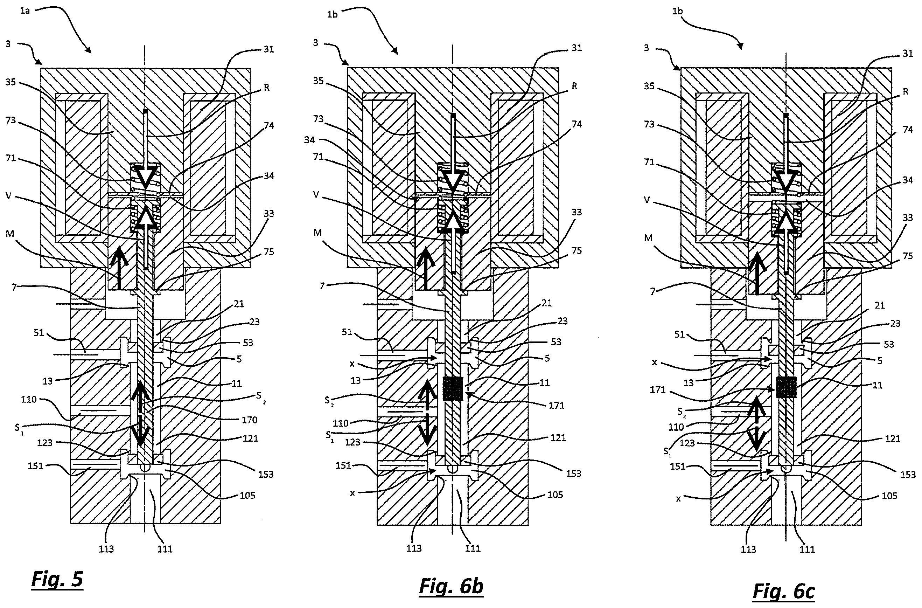

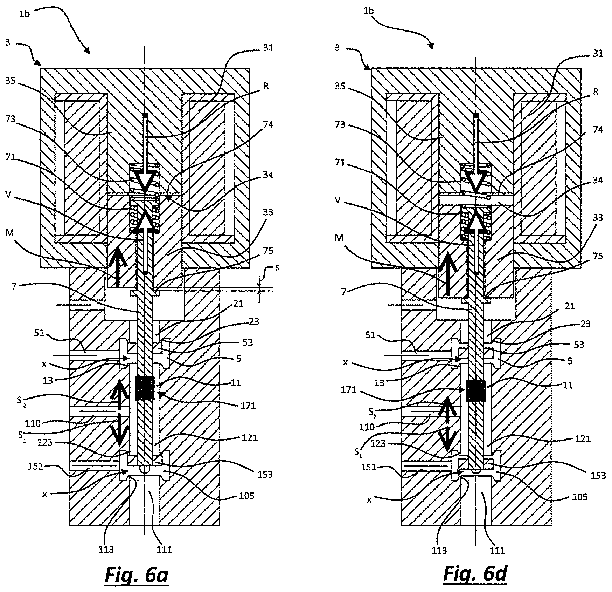

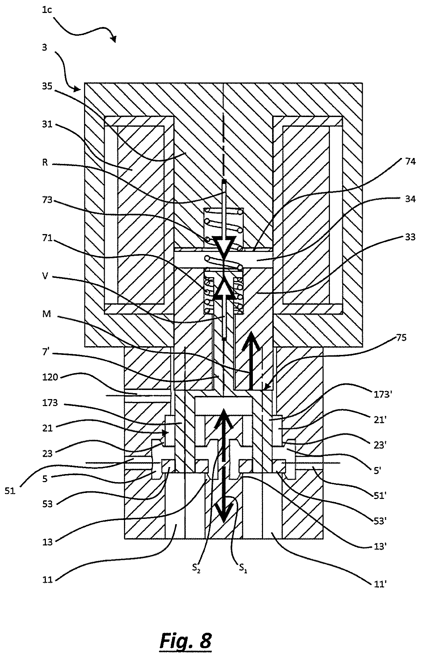

In Figur 5 ist ein anderes erfindungsgemäßes Magnetventil 1a dargestellt. Ein weiteres erfindungsgemäßes Magnetventil 1b zeigen die Figuren 6a bis 6d. In Figur 8 ist eine weitere alternative Ausführung eines erfindungsgemäßen Magnetventils 1c in einer ersten, unteren Schließstellung dargestellt. Der elektromagnetische Aktor 3 und die Anbindung des als Stellstange 7 ausgeführten Mitnehmers an den Aktor 3 mittels eines Mitnahme-Vorspannmittels 71 und eines Rückstell-Vorspannmittels 73 entsprechen den oben beschrieben, weshalb diesbezüglich auf die vorigen Ausführungen verwiesen wird.

Die Magnetventile 1a und 1b realisieren 5/2 Wegeventile Die erste Ventilstufe umfassend das erste Ventilglied 53 in einer ersten Luftkammer 5 mit einem ersten Luftkanal 11, einem zweiten Luftkanal 21 und einem Steuerluftkanal 51 ist bei den Magnetventilen 1a und 1b wie oben bezüglich des Magnetventils 1 beschrieben ausgeführt. Die zweite Ventilstufe ist entsprechend der ersten Ventilstufe ausgebildet.

D.h. die zweite Luftkammer 105 entspricht der ersten Luftkammer 5; der vierte Luftkanal 111 ist entsprechend dem ersten Luftkanal 11 und der fünfte Luftkanal 121 ist entsprechend dem zweiten Luftkanal 21 gebildet; und jede Luftkammer 5 oder 105 hat je einen Steuerluftkanal 51 oder 151. Hinsichtlich der konstruktiven Ausgestaltung und Funktionalität der zweiten Ventilstufe wird im Übrigen auf die obige Beschreibung zur ersten Ventilstufe bei dem in den Figuren 1, 2a und 2b gezeigten Magnetventil 1 verwiesen.

Bei den vorliegenden Ausführungen sind der erste Luftkanal 11 und der fünfte Luftkanal 121 pneumatisch parallel geschaltete und mit einem gemeinsamen Speisekanal 110 verbunden. Der Speisekanal 110 kann an eine Pneumatikquelle angeschlossen sein (nicht dargestellt). Der fünfte Luftkanal ist in diesem Fall ein Belüftungskanal 121. Der zweite Luftkanal 21 und der vierte Luftkanal 111 können pneumatisch parallel geschaltet mit der Atmosphäre oder einer anderen Drucksenke verbunden sein. Der vierte Lüftungskanal ist in diesem Fall ein Abluftkanal 111. Der erste Steuerluftkanal 51 kann mit einer ersten Steuerluftkammer eines pneumatisch doppeltwirkenden Stellantriebs verbunden sein (nicht dargestellt). Der zweite Steuerluftkanal 151 kann mit einer zweiten Steuerluftkammer eines pneumatisch doppeltwirkenden Stellantriebs verbunden sein (nicht dargestellt).

Von dem zuvor beschriebenen Magnetventil 1 unterscheiden sich die Magnetventile 1a und 1b im Wesentlichen nur durch das Vorhandensein einer zweiten Ventilstufe umfassend ein weiteres Ventilglied 153 in einer zweiten Luftkammer 105 mit ihr zugeordneten weiteren Luftkanälen 111, 121 und 151, von denen zwei selektiv durch das zweite Ventilglied 153 verschließbar sind. Die Magnetventile 1a und 1b unterscheiden sich von einander im Wesentlichen nur durch ihre jeweilige Kopplung 170 oder 171 zwischen den beiden Ventilgliedern 53 und 153, die von derselben Stellstange 7 getragen sind. Dadurch, dass die beiden Ventilglieder 53 und 153 an derselben Stellstange 7 befestigt sind, bewegen sich das erste Ventilglied 53 und das zweite Ventilglied 153 in derselben ersten oder zweiten Stellrichtung S1 oder S2.

Die Ventilglieder 53 und 153 können sich in der ersten Stellrichtung S1 so lange bewegen, bis sie sich beide in der ersten Schließstellung befinden (nicht dargestellt). In der ersten Schließstellung befindet sich das zweite Ventilglied 53 in einem dichtenden Berührkontakt mit einem Ventilsitz 13 des ersten Luftkanals 11 und das zweite Ventilglied 153 befindet sich in einem dichtenden Berührkontakt mit einem Ventilsitz 113 des vierten Luftkanals 111.

Die Ventilglieder 53 und 153 können sich gemeinsam in der zweiten Stellrichtung S2 so lange bewegen, bis sie sich beide in der zweiten Schließstellung befinden (Fig. 5, Figs. 6a und 6b). In der zweiten Schließstellung befindet sich das erste Ventilglied 53 in einem dichtenden Berührkontakt mit einem Ventilsitz 23 des zweiten Luftkanals 21 und das zweite Ventilglied 153 befindet sich in einem dichtenden Berührkontakt mit einen Ventilsitz 123 des fünften Luftkanals 121.

Bei dem in Figur 5 dargestellten Magnetventil 1a sind das erste Ventilglied 53 und das zweite Ventilglied 153 mit derselben Stellstange 7 verbunden. Zwischen den Ventilgliedern 53 und 153 ist die Stellstange 7 als starre Kopplung 170 ausgeführt. Die starre Kopplung 170 umfasst eine in Mitnahmerichtung M konstante Elastizität, die der Elastizität der Stellstange 7 zwischen dem ersten Ventilglied 53 und dem Magnetanker 33 und/oder dem Mitnahme-Vorspannmittel 71 entspricht. Die Stellstange 7 ist in Mitnahmerichtung M beginnend bei dem Mitnahme-Vorspannmittel 71 und dem Rückstell-Vorspannmittel 73 über das erste Ventilglied 53 hinaus bis hin zum zweiten Ventilglied 153 als massive Stange mit konstantem Querschnitt und gleichbleibendem Material einstückig gefertigt. Beim Verlassen einer Schließstellung gebend die beiden Ventilglieder 53 und 153 die jeweiligen Ventilsitze 13 und 113 oder 23 und 123 gleichzeitig oder nahezu gleichzeitig frei. Beim Erreichen einer Schließsstellung nehmen die beiden Ventilglieder im unverschlissenen Zustand gleichzeitig die Ventilsitze 13 und 113 oder 23 und 123 ein (erster und vierter Referenzzeitpunkt fallen praktisch zusammen).

Bei dem in den Figuren 6a bis 6d dargestellten Magnetventil 1b sind das erste Ventilglied 53 und das zweite Ventilglied 153 mit derselben Stellstange 7 verbunden.

Zwischen den Ventilgliedern 53 und 153 ist die Stellstange 7 abschnittsweise mit einer elastischen Kopplung 171 ausgeführt. Die elastische Kopplung 171 hat eine erhöhte Elastizität im Vergleich zur Elastizität des Mitnehmers zwischen dem ersten Ventilglied 53 und dem Anker 33 und/oder dem Mitnahme-Vorspannmittel ₇1. Eine erhöhte Elastizität kann beispielsweise durch eine Materialaussparung, wie eine radial außenseitige Einschnürung oder die Stellstange quer durchdringende Öffnung, realisiert sein (nicht abgebildet). Die elastische Kopplung 171 kann realisiert sein durch einen Abschnitt aus einem anderen, elastischeren Material als dem des übrigen Mitnehmers. Die elastische Kopplung 171 kann beispielsweise durch einen Druck- und/oder Zugfederabschnitt gebildet sein. Beispielsweise kann das Magnetventil 1b derart dimensioniert sein, dass die elastische Kopplung 171 in der zweiten Schließstellung (Figs. 6a und 6b) auf Zug gespannt und elastisch gedehnt ist und dass die elastische Kopplung 171 in der ersten Schließstellung entspannt ist, oder auf Druck gespannt und elastisch komprimiert ist.

Ausgehend von der zweiten Schließstellung (Figs. 6a und 6b) können die Ventilglieder 53 und 153 des Magnetventils 1b in die erste Stellrichtung S1 bewegt werden, wobei zunächst das erste Ventilglied 53 (Fig. 6c) und anschließend das zweite Ventilglied 153 (Fig. 6d) den jeweiligen Ventilsitz 23 oder 123 freigibt. Bei einer weiteren Bewegung in die erste Stellrichtung S1 bis zur ersten Schließstellung kann zunächst das zweite Ventilglied 153 und anschließend das erste Ventilglied 53 in einen dichtenden Berührkontakt mit dem jeweiligen Ventilsitz 13 oder 113 gelangen.

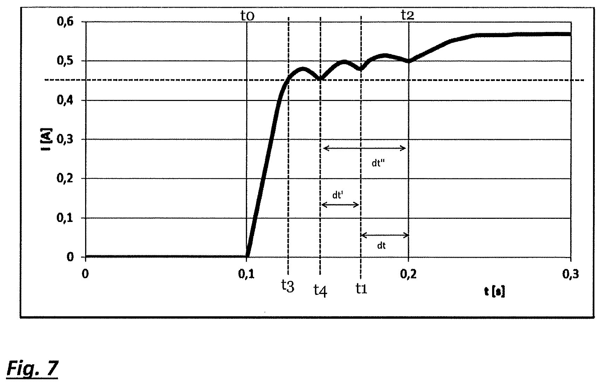

Ausgehend von der ersten Schließstellung können die Ventilglieder 53 und 153 des Magnetventils 1b in die zweite Stellrichtung S2 bewegt werden, wobei zunächst das erste Ventilglied 53 und anschließend das zweite Ventilglied 153 den jeweiligen Ventilsitz 13 oder 113 freigibt (dritter Referenzzeitpunkt t3 gemäß Fig. 7). Bei einer weiteren Bewegung in die zweite Stellrichtung S2 bis zur zweiten Schließstellung (Fig. 6a und 6b) kann zunächst (vierter Referenzzeitpunkt t4 gemäß Fig. 7) das zweite Ventilglied 153 (Fig. 6c) und anschließend (erster Referenzzeitpunkt t1 gemäß Fig. 7) das erste Ventilglied 53 (Fig. 6b) in einen dichtenden Berührkontakt mit dem jeweiligen Ventilsitz 23 oder 123 gelangen. Bei einem weiteren Kraftanstieg kann der Anker 33 wie oben beschrieben relativ zu dem Anschlag 75 in Mitnahmerichtung M angehoben werden, bis der Anker 33 gegen den Stopper 74 trifft (Fig. 6a; zweiter Referenzzeitpunkt t2 gemäß Fig. 7).

Anhand der ersten Anschlags-Zeitdifferenz dt und einer zweiten Anschlags-Zeitdifferenz dt' zwischen t4 und t1 oder dt" zwischen t4 und t2 kann der Verschleißzustand der zweiten Ventilstufe erkannt werden.

Bei dem in Figur 8 abgebildeten Magnetventil 1c sind mehrere insbesondere gleichartige Ventilglieder 53, 53'mit derselben Stellstange 7' verbunden. Das in Figur 8 abgebildete Magnetventil 1c wirkt elektrisch und mechanisch im Wesentlichen wie das oben beschriebene Magnetventil 1a gemäß Figur 5. Beim Verlassen einer Schließstellung gebend die beiden Ventilglieder 53 und 53' die jeweiligen Ventilsitze 13 und 13' oder 23 und 23' gleichzeitig oder nahezu gleichzeitig frei. Beim Erreichen einer Schließsstellung nehmen die beiden Ventilglieder 53 und 53' im unverschlissenen Zustand gleichzeitig die Ventilsitze 13 und 13' oder 23 und 23' ein (erster und vierter Referenzzeitpunkt fallen praktisch zusammen).

Von dem Magnetventil 1a unterscheidet sich das Magnetventil 1c dadurch, dass die Ventilglieder 53 und 53' des Magnetventils 1c nicht in Axialrichtung des Stellgliedes koaxial versetzt zu einander sind, wie die Ventilglieder 53 und 153 des Magnetventils 1a. Die Stellstange 7' gabelt sich zwischen dem gemeinsamen elektromagnetischen Aktor 3 und den Ventilgliedern 53 und 53'. Die Stellstange 7' hat an ihrem ventilseitigen Ende zwei Zinken 173, 173'. In Figur 8 trägt der linke Zinken 173 das linke Ventilglied 53 und der rechte Zinken 173' trägt das rechte Ventilglied 53'. Die Ventilglieder 53 und 53' sind quer bezüglich der Symmetrieachse des elektromagnetischen Aktors 3 insbesondere parallel versetzt. Wenigstens einer oder mehrere Zinken 173, 173' realisieren im Bereich der Gabelung der Stellstange 7' den Anschlag 75.Bei dem Magnetventil 1c kann es bevorzugt sein, dass die beiden unteren Luftkanäle 11 und 11' Luftversorgungskanäle sind. Die Luftkanäle 11 und 11' können mit derselben oder unterschiedlichen Pneumatikquellen verbunden sein. Die beiden oberen Luftkanäle 21, 21' können Entlüftungskanäle sein, die, wie in Figur 8 exemplarisch dargestellt, in einen gemeinsamen Atmosphärenkanal 120 münden können. Der linke Steuerluftkanal 51 und der rechte Steuerluftkanal 51' können mit unterschiedlichen oder demselben pneumatischen Stellventil verbunden sein. Beispielsweise können die beiden Steuerluftkanäle 51 und 51 mit derselben pneumatischen Wirkkammer (Steuerluftkammer) eines pneumatischen Stellantriebs verbunden sein. Alternativ können der rechte Steuerluftkanal 51 und der linke Steuerluftkanal 51' mit einer jeweiligen pneumatischen Wirkkammer unterschiedlicher, insbesondere parallel geschalteter und ausgerichteter, pneumatischer Stellantriebe, verbunden sein.

Es sei klar, dass ein Magnetventil 1c weitere Zinken mit weiteren Ventilgliedern umfassen kann. Alternativ oder ergänzend kann das Magnetventil 1c gemäß Figur 8 entlang jedes einzelnen Stellstangenzinken 173 und/oder 173' weitere Ventilstufen, wie bei den Ausführungen von Magnetventilen 1a gemäß Figur 5 oder 1b gemäß der Figuren 6a bis 6d umfassen kann.

### Bezugszeichenliste

- 1: Magnetventil
- 3: elektropneumatischer Aktor
- 5, 5', 105: Luftkammer
- 7, 7': Stellstange
- 11, 11', 121: Belüftungskanal
- 13, 13': erster Ventilsitz
- 21, 21', 111: Entlüftungskanal
- 23, 23': zweiter Ventilsitz
- 31: (Magnet-)Spule
- 33: Magnetanker
- 34: Spaltraum
- 35: Magnetkern
- 51, 51', 151: Steuerluftkanal
- 53, 53', 153: Ventilglied
- 71: Mitnahme-Vorspannmittel
- 73: Rückstell-Vorspannmittel
- 74: nicht-magnetischer Stopper
- 75: Anschlag
- 110: Speisekanal
- 120: Atmosphärenkanal
- 113, 123: Ventilsitz
- 170: starre Kopplung
- 171: elastische Kopplung
- 173, 173': Zinken

- I: Steuerstrom
- M: Mitnahmerichtung
- V: Mitnahme-Vorspannkraft
- R: Rückstell-Vorspannkraft
- S1: erste Stellrichtung
- S2: zweite Stellrichtung
- dt, dt*, dt', dt": Zeitdifferenz
- s: freier Stellweg
- to, t1, t2, t3, t4: Referenzzeitpunkte
- x: Ventilstellweg

## Patentansprüche

1. Elektropneumatisches Magnetventil (1) für ein Feldgerät einer prozesstechnischen Anlage, wie ein Kraftwerk, eine chemische Anlage, eine Lebensmittel verarbeitende Anlage oder dergleichen, umfassend:
einen elektromagnetischen Aktor (3) mit einer bestrombaren Spule (31) und einem relativ zu der Spule (31) beweglichen Magnetanker (33),
wenigstens eine Luftkammer (5), in die drei Luftkanäle (11, 21,51) münden, wobei die drei Luftkanäle einen ersten Luftkanal (11), einen zweiten Luftkanal (21) und einen Steuerluftkanal (51) umfassen;
wenigstens ein Ventilglied (53), das in einer ersten Schließstellung den ersten Luftkanal (11) verschließt und den zweiten Luftkanal (21) freigibt und das in einer zweiten Schließstellung den zweiten Luftkanal (21) verschließt und den ersten Luftkanal (11) freigibt;
wenigstens einen Mitnehmer, insbesondere eine Stellstange (7) oder -welle, der in einer ersten Stellrichtung (S1) und einer zu der ersten Stellrichtung (S1) entgegengesetzten zweiten Stellrichtung (S2) beweglich ist und der das Ventilglied (53) kraftübertragungsgemäß mit dem Magnetanker (33) verbindet, wobei zwischen dem Mitnehmer und dem Magnetanker (33) wenigstens ein Mitnehm-Vorspannmittel, wie eine Feder (71), zum Bereitstellen einer Vorspannkraft (V) auf den Mitnehmer in einer Mitnahmerichtung (M) entsprechend der ersten oder zweiten Stellrichtung (S1, S2) angeordnet ist und wobei wenigstens ein Rückstell-Vorspannmittel, wie eine Rückstellfeder (73), zum Bereitstellen einer Rückstellkraft (R) auf den Mitnehmer entgegen der Mitnahmerichtung vorgesehen ist, **gekennzeichnet durch** eine analoge und/oder digitale Diagnoseelektronik, die den **durch** die Spule (31) fließenden Strom erfasst, um auf Basis wenigstens eines ersten lokalen Stromflussminimums korrelierend zu einem Auftreffen des Ventilgliedes (53) auf einen Ventilsitz (23) unter Berücksichtigung einer Anschlags-Zeitdifferenz zwischen dem ersten lokalen Stromflussminimum und einem zweiten lokalen Stromflussminimum korrelierend zu einem Auftreffen des Magnetankers (33) auf einen Stopper ein Diagnoseergebnis bereitzustellen.

2. Elektropneumatisches Magnetventil (1) nach Anspruch 1, dadurch **gekenn**- **zeichnet**, dass ein Kern (35) des elektromagnetischen Aktors (3) magnetisierbar, insbesondere ferromagnetisch, ausgebildet ist, wobei zwischen dem Kern (35) und dem Magnetanker (33) ein nichtmagnetischer Spaltraum (34) angeordnet ist, wobei in dem Spaltraum (34) ein Antihaftkörper, wie eine Antihaftbeschichtung oder eine Antihaftscheibe (74), aus einem nichtmagnetisierbaren Material angeordnet ist.

3. Elektropneumatisches Magnetventil (1) nach einem der Ansprüche 1 oder 2, **dadurch gekennzeichnet, dass** der Mitnehmer einen Anschlag (75) zum Bestimmen einer Endstellung des Magnetankers (33) relativ zu dem Mitnehmer entgegen der Mitnahmerichtung aufweist.

4. Elektropneumatisches Magnetventil (1) nach einem der vorstehenden Ansprüche, **dadurch gekennzeichnet, dass** das Mitnehm-Vorspannmittel eine Anschlagswirkung des Ventilglieds (53) auf einen Ventilsitz (23) in der Mitnahmerichtung (M) begrenzt und/oder dass das Rückstell-Vorspannmittel eine Anschlagswirkung des Ventilglieds (53) auf einen Ventilsitz (23) entgegen der Mitnahmerichtung begrenzt.

5. Elektropneumatisches Magnetventil (1) nach einem der vorstehenden Ansprüche, **dadurch gekennzeichnet, dass** das Magnetventil (1) ferner umfasst:
eine zweite Luftkammer (105, 5'), in die drei weitere Luftkanäle (11', 21', 51', 111, 121, 151) münden, wobei die weiteren Luftkanäle einen vierten Luftkanal (11', 111), einen fünften Luftkanal (21', 121) und einen weiteren Steuerluftkanal (51', 151) umfassen;
ein zweites Ventilglied (53', 153), das in der ersten Schließstellung den vierten Luftkanal (11' 111) verschließt und den fünften Luftkanal (21', 121) freigibt und das in der zweiten Schließstellung den fünften Luftkanal (21', 121) verschließt und den vierten Luftkanal (11', 111) freigibt;
wobei der Mitnehmer, insbesondere die Stellstange (7, 7') oder -welle, oder ein zweiter Mitnehmer das zweite Ventilglied (53', 153) trägt.

6. Elektropneumatisches Magnetventil (1) nach Anspruch 5, dadurch **gekenn**- **zeichnet**, dass der erste Luftkanal (11) und der fünfte Luftkanal (121) pneumatisch parallel geschaltet sind und/oder dass der zweite Luftkanal (21) und der vierte Luftkanal (111) parallel geschaltet sind.

7. Elektropneumatisches Magnetventil (1) nach einem der Ansprüche 5 oder 6, **dadurch gekennzeichnet, dass** der Mitnehmer (7) eine elastische Kopplung (171) zwischen dem ersten Ventilglied (53) und dem zweiten Ventilglied (153) umfasst, wobei insbesondere die elastische Kopplung (171) eine Anschlagswirkung des weiteren Ventilglieds (153) auf wenigstens einen weiteren Ventilsitz (113, 123) begrenzt.

8. Elektropneumatisches Magnetventil (1) nach einem der Ansprüche 5 oder 6, **dadurch gekennzeichnet, dass** der Mitnehmer (7) eine starre Kopplung (170) zwischen dem ersten Ventilglied (53) und dem zweiten Ventilglied (153) umfasst, wobei insbesondere das Mitnehm-Vorspannmittel eine Anschlagswirkung des weiteren Ventilglieds (153) auf einen weiteren Ventilsitz (123) in der Mitnahmerichtung (M) begrenzt und/oder dass das Rückstell-Vorspannmittel eine Anschlagswirkung des weiteren Ventilglieds (153) auf einen weiteren Ventilsitz (113) entgegen der Mitnahmerichtung begrenzt.

9. Feldgerät für eine prozesstechnische Anlage, wie ein Kraftwerk, eine chemische Anlage, eine Lebensmittel verarbeitende Anlage oder dergleichen, umfassend:
einen, insbesondere einfachwirkenden oder doppeltwirkenden, pneumatischen Stellventil-Antrieb; und
ein elektropneumatisches Magnetventil (1) nach einem der vorstehenden Ansprüche, wobei der erste Luftkanal (11) ein Belüftungskanal zum Verbinden mit einer Pneumatikquelle und der zweite Luftkanal (21) ein Entlüftungskanal zum Verbinden mit einer pneumatischen Senke ist und wobei der Steuerluftkanal (51) mit einer Steuerluftkammer des Stellventil-Antrieb verbunden ist.

10. Feldgerät nach Anspruch 9 mit einem doppeltwirkenden pneumatischen Stellventil-Antrieb und einem elektropneumatische Magnetventil (1) nach einem der Ansprüche Anspruch 5 bis 8, **dadurch gekennzeichnet , dass** der Steuerluftkanal (51) mit einer ersten Steuerluftkammer des Stellventil-Antriebs verbunden ist und dass der zweite Steuerluftkanal (151) mit einer entgegengesetzt zur ersten Steuerluftkammer wirkenden zweiten Steuerluftkammer verbunden ist.

11. Diagnoseverfahren für ein elektropneumatisches Magnetventil (1)nach einem der vorstehenden Ansprüche 1 bis 8 eines Feldgeräts einer prozesstechnischen Anlage, wie ein Kraftwerk, eine chemische Anlage, eine Lebensmittel verarbeitende Anlage oder dergleichen, insbesondere nach einem der vorstehenden Ansprüche 9 oder 10, umfassend eine Diagnoseroutine
wobei ein elektromagnetischer Aktor (3) mit einem Magnetanker (33) zum Betätigen eines Ventilgliedes (53) aktiviert wird;
wobei als erster Referenzzeitpunkt (t1) das Auftreffen des Ventilgliedes (53) auf einen Ventilsitz (23) korrelierend zu einem ersten Stromflussminimum erfasst wird;
wobei als zweiter Referenzzeitpunkt (t2) das Auftreffen des Magnetankers (33) auf einen Stopper, wie ein nichtmagnetischer Antihaftkörper, beispielsweise eine Antihaftbeschichtung oder eine Antihaftscheibe (74), insbesondere an einem ortsfesten Kern (34) des elektromagnetischen Aktors (3), korrelierend zu einem zweiten Stromflussminimum erfasst wird; und
wobei eine Anschlags-Zeitdifferenz (dt) zwischen dem ersten Referenzzeitpunkt (t1) und dem zweiten Referenzzeitpunkt (t2) ermittelt wird.

12. Diagnoseverfahren nach Anspruch 11, wobei die Diagnoseroutine umfasst, dass als wobei als vierter Referenzzeitpunkt (t4) das Auftreffen eines weiteren Ventilgliedes (153) auf einen weiteren Ventilsitz (123) erfasst wird; wobei insbesondere wenigstens eine weitere Anschlags-Zeitdifferenz (dt') zwischen dem vierten Referenzzeitpunkt (t4) und dem ersten Referenzzeitpunkt (t1) und/oder dem zweiten Referenzzeitpunkt (t2) ermittelt wird.

13. Diagnoseverfahren nach Anspruch 11 oder 12, wobei zum Aktivieren des elektromagnetischen Aktors (3) Strom durch eine Spule (31) des Aktors (3) fließt und wobei der erste Referenzzeitpunkt (t1) und/oder der zweite Referenzzeitpunkt (t2) sowie gegebenenfalls der vierte Referenzzeitpunkt (t4) auf Basis eines lokalen Minimums des Stromflusses (I) durch die Spule (31) erfasst wird.

14. Diagnoseverfahren nach einem der Ansprüche 11 bis 13, wobei als dritter Referenzzeitpunkt (t3) das Lösen des Ventilgliedes (53) von einen zweiten Ventilsitz (23) erfasst wird, wobei insbesondere als fünfter Referenzzeitpunkt (t5) das Lösen des weiteren Ventilgliedes (153) von einem anderen weiteren Ventilsitz (113) erfasst wird.

15. Diagnoseverfahren nach einem der Ansprüche 11 bis 14, wobei mehrere Diagnoseroutinen nach einander durchgeführt werden und wobei die Anschlags-Zeitdifferenzen (dt, dt') der Diagnoseroutinen berücksichtigt, insbesondere mit einander verglichen, werden.

16. Diagnoseverfahren nach einem der Ansprüche 11 bis 15, wobei als Diagnoseergebnis eine Verschleißzustandswarnung erzeugt wird, wenn die Anschlags-Zeitdifferenz (dt, dt') wenigstens einer Diagnoseroutine gegen Null geht oder gleich Null ist.

17. Diagnoseverfahren nach einem der Ansprüche 11 bis 16, wobei als Diagnoseergebnis eine Fehlfunktionswarnung erzeugt wird, wenn eine zweite Zeitdifferenz zwischen zwei Referenzzeitpunkten während wenigstens einer Diagnoseroutine einen Grenzwert überschreitet.

18. Diagnoseverfahren nach einem der Ansprüche 11 bis 17, wobei die Anschlags-Zeitdifferenz (dt) mit einem Referenzwert verglichen wird, insbesondere einem vorbestimmten Schwellenwert, wobei insbesondere eine Warnmeldung oder eine Fehlermeldung ausgegeben wird, wenn die Anschlags-Zeitdifferenz (dt) unter den vorbestimmten Schwellenwert fällt.

## Claims

1. Electropneumatic solenoid valve (1) for a field device of a process plant, such as a power plant, a chemical plant, a food processing plant, or the like, comprising:
an electromagnetic actuator (3) with a coil (31) that can be energized and a solenoid armature (33) movable relative to the coil (31),
at least one air chamber (5) into which three air channels (11, 21, 51) open, wherein the three air channels comprise a first air channel (11), a second air channel (21), and a control air channel (51);
at least one valve member (53) which, in a first closed position, closes the first air channel (11) and opens the second air channel (21) and which, in a second closed position, closes the second air channel (21) and opens the first air channel (11);
at least one driver, in particular an actuating rod (7) or shaft, which is movable in a first actuating direction (S1) and in a second actuating direction (S2) opposite to the first actuating direction (S1) and which connects the valve member (53) to the solenoid armature (33) for force transmission, wherein at least one driver biasing means, such as a spring (71), is arranged between the driver and the solenoid armature (33) to provide a biasing force (V) on the driver in a driving direction (M) corresponding to the first or second actuating direction (S1, S2) and wherein at least one return biasing means, such as a return spring (73), is provided to provide a return force (R) on the driver opposite to the driving direction,
**characterized by**
an analog and/or digital diagnostic electronics that detects the current flowing through the coil (31) to provide a diagnostic result based on at least a first local current flow minimum correlating to an impact of the valve member (53) on a valve seat (23) considering a stop time difference between the first local current flow minimum and a second local current flow minimum correlating to an impact of the solenoid armature (33) on a stopper.

2. Electropneumatic solenoid valve (1) according to claim 1, **characterized in that** a core (35) of the electromagnetic actuator (3) is magnetizable, in particular ferromagnetic, wherein a non-magnetic gap (34) is arranged between the core (35) and the solenoid armature (33), wherein an anti-adhesion body, such as an anti-adhesion coating or an anti-adhesion disc (74), made of a non-magnetizable material is arranged in the gap (34).

3. Electropneumatic solenoid valve (1) according to one of claims 1 or 2, **characterized in that** the driver has a stop (75) for determining an end position of the solenoid armature (33) relative to the driver opposite to the driving direction.

4. Electropneumatic solenoid valve (1) according to one of the preceding claims, **characterized in that** the driver biasing means limits a stop effect of the valve member (53) on a valve seat (23) in the driving direction (M) and/or that the return biasing means limits a stop effect of the valve member (53) on a valve seat (23) opposite to the driving direction.

5. Electropneumatic solenoid valve (1) according to one of the preceding claims, **characterized in that** the solenoid valve (1) further comprises:
a second air chamber (105, 5'), into which three further air channels (11', 21', 51', 111, 121, 151) open, wherein the further air channels comprise a fourth air channel (11', 111), a fifth air channel (21', 121), and a further control air channel (51', 151);
a second valve member (53', 153) which, in the first closed position, closes the fourth air channel (11', 111) and opens the fifth air channel (21', 121) and which, in the second closed position, closes the fifth air channel (21', 121) and opens the fourth air channel (11', 111);
wherein the driver, in particular the actuating rod (7, 7') or shaft, or a second driver carries the second valve member (53', 153).

6. Electropneumatic solenoid valve (1) according to claim 5, **characterized in that** the first air channel (11) and the fifth air channel (121) are pneumatically connected in parallel and/or that the second air channel (21) and the fourth air channel (111) are connected in parallel.

7. Electropneumatic solenoid valve (1) according to one of claims 5 or 6, **characterized in that** the driver (7) comprises an elastic coupling (171) between the first valve member (53) and the second valve member (153), wherein in particular the elastic coupling (171) limits a stop effect of the further valve member (153) on at least one further valve seat (113, 123).

8. Electropneumatic solenoid valve (1) according to one of claims 5 or 6, **characterized in that** the driver (7) comprises a rigid coupling (170) between the first valve member (53) and the second valve member (153), wherein in particular the driver biasing means limits a stop effect of the further valve member (153) on a further valve seat (123) in the driving direction (M) and/or that the return biasing means limits a stop effect of the further valve member (153) on a further valve seat (113) opposite to the driving direction.

9. Field device for a process plant, such as a power plant, a chemical plant, a food processing plant, or the like, comprising:
a pneumatic control valve actuator, in particular single-acting or double-acting; and
an electropneumatic solenoid valve (1) according to one of the preceding claims, wherein the first air channel (11) is a supply channel for connecting to a pneumatic source and the second air channel (21) is an exhaust channel for connecting to a pneumatic sink and wherein the control air channel (51) is connected to a control air chamber of the control valve actuator.

10. Field device according to claim 9 with a double-acting pneumatic control valve actuator and an electropneumatic solenoid valve (1) according to one of claims 5 to 8, **characterized in that** the control air channel (51) is connected to a first control air chamber of the control valve actuator and that the second control air channel (151) is connected to a second control air chamber acting opposite to the first control air chamber.

11. Diagnostic method for an electropneumatic solenoid valve (1) according to one of the preceding claims 1 to 8 of a field device of a process plant, such as a power plant, a chemical plant, a food processing plant, or the like, in particular according to one of the preceding claims 9 or 10, comprising a diagnostic routine
wherein an electromagnetic actuator (3) with a solenoid armature (33) is activated to actuate a valve member (53);
wherein as a first reference time (t1) the impact of the valve member (53) on a valve seat (23) correlating to a first current flow minimum is detected;
wherein as a second reference time (t2) the impact of the solenoid armature (33) on a stopper, such as a non-magnetic anti-adhesion body, for example an anti-adhesion coating or an anti-adhesion disc (74), in particular on a stationary core (34) of the electromagnetic actuator (3), correlating to a second current flow minimum is detected; and
wherein a stop time difference (dt) between the first reference time (t1) and the second reference time (t2) is determined.

12. Diagnostic method according to claim 11, wherein the diagnostic routine comprises that as a fourth reference time (t4) the impact of a further valve member (153) on a further valve seat (123) is detected;
wherein in particular at least one further stop time difference (dt') between the fourth reference time (t4) and the first reference time (t1) and/or the second reference time (t2) is determined.

13. Diagnostic method according to claim 11 or 12, wherein to activate the electromagnetic actuator (3) current flows through a coil (31) of the actuator (3) and wherein the first reference time (t1) and/or the second reference time (t2) and optionally the fourth reference time (t4) is detected based on a local minimum of the current flow (I) through the coil (31).

14. Diagnostic method according to one of claims 11 to 13, wherein as a third reference time (t3) the release of the valve member (53) from a second valve seat (23) is detected, wherein in particular as a fifth reference time (t5) the release of the further valve member (153) from another further valve seat (113) is detected.

15. Diagnostic method according to one of claims 11 to 14, wherein several diagnostic routines are carried out in succession and wherein the stop time differences (dt, dt') of the diagnostic routines are considered, in particular compared, with each other.

16. Diagnostic method according to one of claims 11 to 15, wherein as a diagnostic result a wear condition warning is generated if the stop time difference (dt, dt') of at least one diagnostic routine approaches zero or is equal to zero.

17. Diagnostic method according to one of claims 11 to 16, wherein as a diagnostic result a malfunction warning is generated if a second time difference between two reference times during at least one diagnostic routine exceeds a limit value.

18. Diagnostic method according to one of claims 11 to 17, wherein the stop time difference (dt) is compared with a reference value, in particular a predetermined threshold value, wherein in particular a warning message or an error message is output if the stop time difference (dt) falls below the predetermined threshold value.

## Revendications

1. Électrovanne (1) électropneumatique, destinée à un équipement de terrain d'une installation technique de procédé, telle qu'une centrale électrique, une installation chimique, une installation de traitement de produits alimentaires ou analogues, comprenant :
un actionneur (3) électromagnétique doté d'une bobine (31) susceptible d'être alimentée en courant et d'un induit magnétique (33) déplaçable par rapport à la bobine (31),
au moins une chambre à air (5), dans laquelle débouchent trois conduits d'air (11, 21, 51) les trois conduits d'air comprenant un premier conduit d'air (11), un deuxième conduit d'air (21) et un conduit (51) d'air de commande ;
au moins un organe (53) de vanne, qui dans une première position de fermeture, ferme le premier conduit d'air (11) et libère le deuxième conduit d'air (21) et qui dans une deuxième position de fermeture, ferme le deuxième conduit d'air (21) et libère le premier conduit d'air (11) ;
au moins un entraîneur, notamment une tige de réglage (7) ou un arbre de réglage, qui est déplaçable dans une première direction de réglage (S1) et dans une deuxième direction de réglage (S2) opposée à la première direction de réglage (S1) et qui relie l'organe (53) de vanne par transmission de force avec l'induit magnétique (33), entre l'entraîneur et l'induit magnétique (33) étant placé au moins un moyen de précontrainte par entraînement, tel qu'un ressort (71), pour la mise à disposition d'une force de précontrainte (V) exercée sur l'entraîneur dans une direction d'entraînement (M) correspondant à la première ou à la deuxième direction de réglage (S1, S2) et au moins un moyen de précontrainte par rappel, tel qu'un ressort de rappel (73) étant prévu, pour la mise à disposition d'une force de rappel (R) exercée sur l'entraîneur à l'encontre de la direction d'entraînement, **caractérisée par** une électronique de diagnostic analogique et / ou numérique, qui détecte le courant circulant à travers la bobine (31), pour mettre à disposition un résultat de diagnostic, sur la base d'au moins un premier minimum de flux de courant local, en corrélation avec une incidence de l'organe (53) de vanne sur un siège (23) de vanne, sous prise en considération d'une différence temporelle de butée entre le premier minimum de flux de courant local et un deuxième minimum de flux de courant local, en corrélation avec une incidence de l'induit magnétique (33) sur un stoppeur.

2. Électrovanne (1) électropneumatique selon la revendication 1, **caractérisée en ce qu'**un noyau (35) de l'actionneur (3) électromagnétique est conçu de sorte à être magnétisable, notamment en étant ferromagnétique, entre le noyau (35) et l'induit magnétique (33) étant placé un intervalle (34) non magnétique, dans l'intervalle (34) étant placé un corps anti-adhérent, tel qu'un revêtement anti-adhérent, ou un disque (74) anti-adhérent, en une matière non magnétisable.

3. Électrovanne (1) électropneumatique selon l'une quelconque des revendications 1 ou 2, **caractérisée en ce que** l'entraîneur comporte une butée (75), destinée à déterminer une position finale de l'induit magnétique (33) par rapport à l'entraîneur, à l'encontre de la direction d'entraînement.

4. Électrovanne (1) électropneumatique selon l'une quelconque des revendications précédentes, **caractérisée en ce que** le moyen de précontrainte par entraînement limite un effet de butée exercé par l'organe (53) de vanne sur un siège (23) de vanne dans la direction d'entraînement (M) et / ou **en ce que** le moyen de précontrainte par rappel limite un effet de butée exercé par l'organe (53) de vanne sur un siège (23) de vanne, à l'encontre de la direction d'entraînement.

5. Électrovanne (1) électropneumatique selon l'une quelconque des revendications précédentes, **caractérisée en ce que** l'électrovanne (1) comprend par ailleurs :
une deuxième chambre à air (105, 5'), dans laquelle débouchent trois conduits d'air (11', 21', 51', 111, 121, 151) supplémentaires, les conduits d'air supplémentaires comprenant un quatrième conduit d'air (11', 111), un cinquième conduit d'air (21', 121) et un conduit (51', 151) d'air de commande supplémentaire ;
un deuxième organe (53', 153) de vanne, qui dans la première position de fermeture, ferme le quatrième conduit d'air (11' 111) et libère le cinquième conduit d'air (21', 121) et qui dans la deuxième position de fermeture, ferme le cinquième conduit d'air (21', 121) et libère le quatrième conduit d'air (11', 111) ;
l'entraîneur, notamment la tige de réglage (7, 7') ou l'arbre de réglage, ou un deuxième entraîneur portant le deuxième organe (53', 153) de vanne.

6. Électrovanne (1) électropneumatique selon la revendication 5, **caractérisée en ce que** le premier conduit d'air (11) et le cinquième conduit d'air (121) sont pneumatiquement montés en parallèle et / ou **en ce que** le deuxième conduit d'air (21) et le quatrième conduit d'air (111) sont montés en parallèle.

7. Électrovanne (1) électropneumatique selon l'une quelconque des revendications 5 ou 6, **caractérisée en ce que** l'entraîneur (7) comprend un accouplement (171) élastique entre le premier organe (53) de vanne et le deuxième organe (153) de vanne, notamment l'accouplement (171) élastique limitant un effet de butée exercé par l'organe (153) de vanne supplémentaire sur au moins un siège (113, 123) de vanne supplémentaire.

8. Électrovanne (1) électropneumatique selon l'une quelconque des revendications 5 ou 6, **caractérisée en ce que** l'entraîneur (7) comprend un accouplement (170) rigide entre le premier organe (53) de vanne et le deuxième organe (153) de vanne, notamment le moyen de contrainte par entraînement limitant un effet de butée exercé par l'organe (153) de vanne supplémentaire sur un siège (123) de vanne supplémentaire dans la direction d'entraînement (M) et / ou **en ce que** le moyen de précontrainte par rappel limite un effet de butée exercé par l'organe (153) de vanne supplémentaire sur un siège (113) de vanne supplémentaire à l'encontre de la direction d'entraînement.

9. Equipement de terrain, destiné à une installation technique de procédé, telle qu'une centrale électrique, une installation chimique, une installation de traitement de produits alimentaires ou analogues, comprenant :
un entraînement pneumatique de vanne de réglage, notamment à simple effet ou à double effet ; et
une électrovanne (1) électropneumatique selon l'une quelconque des revendications précédentes, le premier conduit d'air (11) étant un conduit de ventilation, destiné à être relié avec une source pneumatique et le deuxième conduit d'air (21) étant un conduit de purge, destiné à être relié avec une cuvette pneumatique et le conduit (51) d'air de commande étant relié avec une chambre d'air de commande de l'entraînement de vanne de réglage.

10. Equipement de terrain selon la revendication 9, pourvu d'un entraînement pneumatique de vanne de réglage à double effet et d'une électrovanne (1) électropneumatique selon l'une quelconque des revendications 5 à 8, **caractérisé en ce que** le conduit (51) d'air de commande est relié avec une première chambre d'air de commande de l'entraînement de vanne de réglage et **en ce que** le deuxième conduit (151) d'air de commande est relié avec une deuxième chambre d'air de commande agissant à l'encontre de la première chambre d'air de commande.

11. Procédé de diagnostic pour une électrovanne (1) électropneumatique selon l'une quelconque des revendications précédentes 1 à 8 d'un équipement de terrain d'une installation technique de procédé, telle qu'une centrale électrique, une installation chimique, une installation de traitement de produits alimentaires ou analogues, notamment selon l'une quelconque des revendications précédentes 9 ou 10, comprenant une routine de diagnostic,
un actionneur (3) électromagnétique doté d'un induit magnétique (33) étant activé pour l'actionnement d'un organe (53) de vanne ;
en tant que premier moment de référence (t1) étant détectée l'incidence de l'organe (53) de vanne sur un siège (23) de vanne, en corrélation avec un premier minimum de flux de courant ;
en tant que deuxième moment de référence (t2) étant détectée l'incidence de l'induit magnétique (33) sur un stoppeur, tel qu'un corps anti-adhérent non magnétique, par exemple un revêtement anti-adhérent ou un disque (74) anti-adhérent, notamment sur un noyau (34) stationnaire de l'actionneur (3) électromagnétique, en corrélation avec un deuxième minimum de flux de courant ; et
une différence temporelle (dt) de butée entre le premier moment de référence (t1) et le deuxième moment de référence (t2) étant déterminée.

12. Procédé de diagnostic selon la revendication 11, la routine de diagnostic comprenant qu'en tant que quatrième moment de référence (t4), l'incidence d'un organe (153) de vanne supplémentaire sur un siège (123) de vanne supplémentaire est détecté ;
notamment au moins une différence temporelle (dt') de butée supplémentaire entre le quatrième moment de référence (t4) et le premier moment de référence (t1) et / ou le deuxième moment de référence (t2) étant déterminée.

13. Procédé de diagnostic selon la revendication 11 ou 12, pour l'activation de l'actionneur (3) électromagnétique, du courant circulant à travers une bobine (31) de l'actionneur (3)
et le premier moment de référence (t1) et / ou le deuxième moment de référence (t2), ainsi que le cas échéant le quatrième moment de référence (t4) étant détectés sur la base d'un minimum local (I) du flux de courant à travers la bobine (31).

14. Procédé de diagnostic selon l'une quelconque des revendications 11 à 13, en tant que troisième moment de référence (t3) étant détectée la désolidarisation de l'organe (53) de vanne d'un deuxième siège (23) de vanne, notamment en tant que cinquième moment de référence (t5) étant détectée la désolidarisation de l'organe (153) de vanne supplémentaire d'un autre siège (113) de vanne supplémentaire.

15. Procédé de diagnostic selon l'une quelconque des revendications 11 à 14, plusieurs routines de diagnostic étant réalisées successivement et les différences temporelles (dt, dt') de butée des routines de diagnostic étant prises en considération, notamment comparées les unes avec les autres.

16. Procédé de diagnostic selon l'une quelconque des revendications 11 à 15, en tant que résultat de diagnostic étant généré un avertissement d'état d'usure si la différence temporelle (dt, dt') de butée d'au moins une routine de diagnostic s'approche de zéro ou est égale à zéro.

17. Procédé de diagnostic selon l'une quelconque des revendications 11 à 16, en tant que résultat de diagnostic étant généré un avertissement de dysfonctionnement si une deuxième différence temporelle entre deux moments de référence excède une valeur limite pendant au moins une routine de diagnostic.

18. Procédé de diagnostic selon l'une quelconque des revendications 11 à 17, la différence temporelle (dt) de butée étant comparée avec une valeur de référence, notamment une valeur seuil prédéfinie, notamment un message d'avertissement ou un message de défaut étant délivré si la différence temporelle (dt) de butée tombe sous la valeur seuil prédéfinie.
